# EUROPÄISCHE PATENTSCHRIFT

(11) **EP 1 716 013 B1**
(45) Veröffentlichungstag und Bekanntmachung des Hinweises auf die Patenterteilung: **09.04.2014**
(21) Anmeldenummer: 05706700.1
(22) Anmeldetag: 26.01.2005
(51) Int. Cl.: B60J 7/12

(54) **VORRICHTUNG ZUR BETÄTIGUNG WENIGSTENS EINES SCHWENKBAREN FAHRZEUGAUSSENELEMENTS**
DEVICE FOR ACTUATING AT LEAST ONE PIVOTED EXTERIOR ELEMENT OF A VEHICLE
DISPOSITIF POUR ACTIONNER AU MOINS UN ELEMENT EXTERIEUR PIVOTANT D'UN VEHICULE

(30) Priorität: 26.01.2004 DE 102004003954
(43) Veröffentlichungstag der Anmeldung: 02.11.2006
(60) Teilanmeldung: 13195814.2
(73) Patentinhaber: Valmet Automotive Oy, 23500 Uusikaupunki (FI)
(72) Erfinder: JAHN, Jorg, 32257 Bünde (DE); GUTENDORF, Peter, 49088 Osnabrück (DE); PELLENWESSEL, Ansgar, 49088 Osnabrück (DE)
(74) Vertreter: Kronthaler, Schmidt & Coll.
(86) Internationale Anmeldenummer: PCT/DE2005/000105
(87) Internationale Veröffentlichungsnummer: WO 2005/070716

(56) Entgegenhaltungen:
- EP-A2- 1 275 543
- DE-A1- 19 932 500
- DE-C1- 19 847 983
- US-A- 2 632 670
- US-A- 5 772 274

## Beschreibung

Die Erfindung betrifft eine Vorrichtung zur Betätigung wenigstens eines schwenkbaren Fahrzeugaußenelements, insbesondere eines Verdeckelements eines Cabriolet-Fahrzeugs, nach der im Oberbegriff des Patentanspruches 1 näher definierten Art.

Die Betätigung von automatisch verschwenkbaren Fahrzeugaußenteilen, welche insbesondere Verdeckelemente eines Cabriolet-Fahrzeugs und Heck- bzw. Kofferraumdeckel darstellen, aber welche auch als sonstige Fahrzeugaußenteile wie z. B. ein Tankdeckel oder ein Türelement ausgebildet sein können, erfolgt in der Praxis üblicherweise durch Fluidantriebe in Form von Hydraulikzylindern, die mit einem Ende an der Fahrzeugkarosserie angelenkt sind und mit dem anderen Ende an die zu schwenkenden Fahrzeugaußenelemente angreifen.

Neben den üblicherweise Hydrauliksystemen immanenten Nachteilen hinsichtlich des Temperaturverhaltens und des Wartungsaufwandes sowie des gewöhnlich hohen Bauraumbedarfes ist bei der Verwendung eines hydraulischen Antriebs zur Verschwenkung eines Fahrzeugaußenelementes insbesondere die begrenzte Flexibilität hinsichtlich der Gestaltung der Bewegungsbahn des Fahrzeugaußenelements nachteilig.

Aus der Praxis ist es von Cabriolet-Fahrzeugen bekannt, dass ein Verdeck oder ein Verdeckkastendeckel über einen elektrischen Antrieb bewegt wird. Hierbei kommen Linearantriebe zum Einsatz, welche als Ersatz für eine hydraulische Ansteuerung für die entsprechende Anwendung konstruiert sind, wobei die von einem Elektromotor erzeugte Linearbewegung über einen geeigneten Mehrgelenk-Mechanismus an das wenigstens eine schwenkbare Fahrzeugaußenelement übertragen wird. Ein solcher Antrieb eines schwenkbaren Fahrzeugaußenelements gestaltet sich somit ebenfalls aufwändig.

Besonders gravierend wirken sich die vorbezeichneten Nachteile bei der Betätigung von mehreren schwenkbaren Fahrzeugaußenelementen aus, wie sie beispielsweise die Verdeckelemente eines Cabriolet-Fahrzeugs darstellen. Bei Cabriolet-Fahrzeugen, deren Verdeck in einem geöffneten Zustand zusammengefaltet bzw. zusammengeklappt und üblicherweise in einem Ablageraum im Heckbereich des Fahrzeuges abgelegt ist, besteht die Problematik, mit einem möglichst leichten Verdeck und einer einfachen Kinematik eine Verdeckbewegung zwischen dessen Endlagen zu realisieren, wobei bei der Auslegung der Bewegungsbahnen des Verdecks einerseits eine ausreichende Höhe hinsichtlich des Kopfbereiches von Fahrzeuginsassen und andererseits eine möglichst geringe Höhe in Bezug auf mögliche räumliche Begrenzungen, wie z. B. ein Garagendach, zu berücksichtigen ist.

Üblicherweise werden die Dachelemente eines Verdecks hierzu über ein Verdeckgestänge angetrieben, welches über ein Hauptlager an eine Karosserie angebunden ist und in der Regel hydraulisch über Gelenke eine Kraftübertragung vom Antriebsmotor bis zu einem frontseitigen Ende des Verdecks herstellt.

Wenngleich die Bewegungsabläufe für einen Spannbügel, einen Verdeckkastendeckel und den Verdeckmechanismus an sich separat gestaltet werden können, ist jedoch bei dem Verdeckmechanismus meist eine Zwangssteuerung über den hydraulischen Antrieb gegeben, womit die einzelnen Gelenke des Verdeckgestänges nicht separat ansteuerbar sind.

Die deutsche Patentschrift DE 198 47 983 Cl beschreibt ein mehrteiliges, versenkbares Fahrzeugverdeck, welches die Möglichkeit der Ansteuerung von mehreren Verdeckelementen unabhängig voneinander bietet. Hierzu wird ein mehrteiliges, versenkbares Fahrzeugverdeck mit wenigstens zwei biegesteifen Verdeckelementen, die schwenkbar miteinander und über wenigstens ein Verdeckelement schwenkbar mit der Fahrzeugkarosserie verbunden sind, derart ausgestaltet, dass zur Verbindung der wenigstens zwei biegesteifen Verdeckelemente miteinander bzw. mit der Fahrzeugkarosserie Drehgelenke vorgesehen sind, wobei je Verbindung wenigstens eines der Drehgelenke mittels eines fluidischen Antriebs antreibbar ist.

Bei dieser bekannten Lösung wird ein herkömmliches Getriebegestänge durch einen aufwändigen Mechanismus mit mehreren hydraulischen Antrieben ersetzt. Neben dem erforderlichen konstruktiven Aufwand und der Erfordernis einer separaten Hydraulikpumpe für jeden Gelenkpunkt, um verschiedene Gelenkpunkte mit unabhängigen Volumenströmen ansteuern zu können, sowie einem entsprechend hohen Gewicht des Verdecks ist die Geschwindigkeit der Verdeckbewegung durch die systemimmanenten Nachteile eines hydraulischen Antriebs beschränkt, zu denen die große Temperaturabhängigkeit, die aufgrund der vergleichsweise geringen Steifigkeit von hydraulischen Systemen und deren Totzeiten gegebenen Einschränkungen bei der Geschwindigkeitsregelung sowie ein schlechter Wirkungsgrad zählen.

Weiterhin ist aus der US 5,772,274 A ein Verdeck eines Cabriolet-Fahrzeugs bekannt, welches mittels eines mit einem Verdeckantriebsmechanismus zusammenwirkenden Elektromotors zwischen einer geschlossenen und einer offenen Position verlagerbar ist. Der Elektromotor treibt einen Hauptlenker an, welcher mit weiteren Verdeckelementen über ein Verdeckgestänge verbunden ist. Der Elektromotor kann den Hauptlenker hierzu um einen Drehpunkt verschwenken. Zudem ist ein weiterer Elektromotor vorgesehen, mittels welchem ein Spannbügel um einen weiteren Drehpunkt gegenüber dem Hauptlenker verlagert werden kann.

Es ist daher Aufgabe der vorliegenden Erfindung, eine Vorrichtung zur Betätigung wenigstens eines schwenkbaren Fahrzeugaußenelements, insbesondere eines Verdeckelements eines Cabriolet-Fahrzeugs, nach der eingangs näher beschriebenen Art zu schaffen, welche im Hinblick auf einen einfachen, flexibel gestaltbaren und schnelleren Bewegungsablauf bei der Verschwenkung des wenigstens einen Fahrzeugaußenelements, eine einfachere Konstruktion und ein geringeres Gewicht verbessert ist.

Erfindungsgemäß wird diese Aufgabe durch die im kennzeichnenden Teil des Patentanspruches 1 genannten Merkmale gelöst.

Wenn eine Vorrichtung zur Betätigung mehrerer schwenkbarer Fahrzeugaußenelemente, welche Verdeckelemente eines Verdecks für ein Cabriolet-Fahrzeug sind und wenigstens zusammenfaltbare Dachelemente umfassen, wobei zur Verschwenkung der Verdeckelemente untereinander bzw. gegenüber der Fahrzeug-Karosserie wenigstens ein Drehgelenk und Antrieb vorgesehen sind, wobei als Antrieb für Drehgelenke von Verbindungen zwischen den Verdeckelementen untereinander ein Elektromotor vorgesehen ist, welcher ein Antriebsmoment direkt in ein Drehgelenk einleitet, wobei jeweils wenigstens ein Drehgelenk unterschiedlicher Verbindungen separat ansteuerbar ist, erfindungsgemäß derart ausgestaltet ist, dass jeder Verbindung der Verdeckelemente untereinander bzw. mit der Fahrzeugkarosserie um eine Drehachse ein Elektromotor zugeordnet ist, hat dies den Vorteil, dass sich auf diese Weise die höchste Flexibilität hinsichtlich einer unabhängigen Bewegung der einzelnen Verdeckelemente realisieren lässt und durch die Vermeidung von systembedingten Totzeiten eines hydraulischen Antriebs und dessen geringer Steifigkeit ein deutlich schnellerer Bewegungsablauf realisierbar ist.

Durch die Verwendung von antreibbaren Drehgelenken, welche als tragende Drehgelenke einsetzbar sind, können vorteilhafterweise beliebige, flexible Bewegungsbahnen dargestellt werden. Mit einem erfindungsgemäßen Antrieb können Bewegungsbahnen dargestellt werden, welche sowohl den Forderungen nach einer ausreichenden Kopfhöhe für Passagiere z. B. im Fond gerecht werden als auch einen Beschädigungsschutz durch einen einstellbaren Abstand gegenüber einem Höhenhindernis, wie beispielsweise einer Garagendecke, bieten.

Weiterhin von Vorteil ist bei einer erfindungsgemäßen Ausgestaltung eines Antriebs für ein schwenkbares Fahrzeugaußenelement die Möglichkeit der Bereitstellung von Komfortfunktionen, wie einer den räumlichen, ggf. über eine geeignete Sensorik ermittelten Umgebungsbedingungen angepasste Automatik, mittels der ein Verdeck bei vordefinierten Umgebungsbedingungen oder Ereignissen, wie z. B. Regen, selbständig schließt oder öffnet.

So kann beispielsweise durch eine Abstandssensorik und zugeordnete, in der zentralen elektrischen Steuereinheit abgelegte Ansteuermodi die Verdeckbewegung der zur Verfügung stehenden Raumhöhe optimal angepasst werden.

Des Weiteren ist die Betätigung des wenigstens einen schwenkbaren Fahrzeugaußenelements über eine Fernbedienung möglich, wozu bei einem Verdeck das Aufklappen lediglich eines Front-Dachelementes und somit die Schaffung eines Targa-ähnlich geöffneten Verdecks zählt.

Das Vorsehen eines Elektromotors als Antrieb für das wenigstens eine Drehgelenk hat des Weiteren den Vorteil, dass anhand des Motorstroms des zugeordneten Gelenkantriebs eine einfache Möglichkeit einer Einklemmerkennung gegeben ist, wobei mit geringer Reaktionszeit bei einem Verdeck ein Verdeckstop oder eine reversible Verdeckbewegung einleitbar und somit ein hoher Einklemmschutz verwirklichbar ist. Des Weiteren ist auf diese Weise eine vereinfachte Ortung der Störstelle möglich.

Weiterhin können auch Möglichkeiten einer Notbetätigung oder einer Selbsthemmung vorgesehen sein.

Elektromotoren stellen kostengünstige, einfache und kompakte Bauelemente dar, welche bei den erforderlichen Motorkräften mit geringem Bauraumbedarf ausgelegt werden können und universal für verschiedene Drehgelenke und verschiedene schwenkbare Fahrzeugaußenelemente oder Baugruppen hiervon eingesetzt werden können.

Darüber hinaus bieten sie alle Möglichkeiten zur Steuerung und Regelung der Antriebe entsprechend der gewünschten unabhängigen Bewegungen der Gelenkpunkte bzw. Drehgelenke unabhängig von den Umgebungstemperaturen, sind geräuscharm und haben einen geringen Wartungsbedarf.

In hiervon abweichenden Ausführungen ist es jedoch auch denkbar, dass nicht jeder Drehachse ein Elektromotor zugeordnet ist, sondern dass ein Antrieb für mehr als eine Drehachse verwendet wird. In der Praxis lassen sich häufig Drehachsen, insbesondere Drehachsen mit einem nahezu synchronen Bewegungsablauf, auf einfache Weise koppeln, wobei eine Aufsplittung des Antriebs eines Elektromotors auf zwei oder mehr drehende Wellen denkbar ist, oder eine Zwangsführung einer der Drehachsen.

Wenn ein Elektromotor mehrere Drehachsen zugeordnet ist, lassen sich erheblich Kostenvorteile und eine deutliche Reduktion des Bauraumbedarfs erzielen.

In weiterer Ausgestaltung der Erfindung kann es vorgesehen sein, dass eine Verbindung der Verdeckelemente untereinander bzw. mit der Fahrzeugkarosserie durch wenigstens ein ansteuerbares Drehgelenk und wenigstens ein passives Drehgelenk gebildet wird, wobei die zugeordnete Drehachse der Verbindung eine Drehachse eines passiven Drehgelenks ist. Bei der Verwendung von aktiven Drehgelenken, welche eine unmittelbare angetriebene Verbindung zwischen zwei Teilen darstellen, und passiven Drehgelenken, welche z. B. durch eine Nietung gebildet sein können und nur eine Drehachse bilden, kann eine Verbindung zwischen zwei Verdeckelementen bzw. einem Verdeckelement und der Fahrzeug-Karosserie derart gestaltet werden, dass das aktive Drehgelenk nicht direkt an der Drehachse der Verbindung angreift, sondern die Verdrehung hieran beispielsweise mittels eines Hilfshebels bewirkt, so dass das aktive Drehgelenk nur dem erforderlichen Drehmoment stand halten muss und nicht den weiteren im Gelenkpunkt der Verbindung auftretenden Kräften. Das aktive Drehgelenk bildet somit bei einer derartigen Ausgestaltung einen Antrieb für ein die eigentliche Drehachse der Verbindung bildendes passives Drehgelenk.

Hinsichtlich der Ansteuerung eines schwenkbaren Fahrzeugaußenelements bzw. Verdeckelements kann es vorgesehen sein, dass mehrere Elektromotoren mit einer zentralen elektrischen Steuereinheit verbunden sind.

Abweichend hierzu oder ergänzend kann jedoch auch zumindest ein Teil der verwendeten Elektromotoren jeweils eine eigene Steuereinheit aufweisen, welche jeweils über einen Datenbus, z. B. eine CAN-Bus eines Bordnetzes des Fahrzeugs, mit wenigstens einer weiteren Steuereinheit für wenigstens einen Elektromotor verbunden ist.

Hinsichtlich der Anordnung der Elektromotoren sind viele Alternativen möglich, wobei die Elektromotoren bei in Fahrzeuglängsrichtung verschwenkbaren Fahrzeugaußenelementen je nach Package-Gestaltung zentral auf der Fahrzeuglängsachse oder dezentral zur Fahrzeuglängsachse angeordnet sein können.

Je nach Anordnung der Elektromotoren sind die von den Elektromotoren zu Paarungen von Drehgelenken führenden, vorzugsweise biegsamen Wellen hinsichtlich ihrer Torsionssteifigkeit so auszulegen, dass sich unterschiedliche Längen von dem Elektromotor zu dem Drehgelenk nicht auf den Gleichlauf von gegenüber liegend angeordneten Drehgelenken auswirken.

Besonders vorteilhaft ist die erfindungsgemäße Vorrichtung auch, wenn das zu verschwenkende Fahrzeugaußenelement ein Deckelelement ist, welches aus einer Schließstellung wenigstens an einer Kante durch Verschwenkung mittels wenigstens eines antreibbaren Drehgelenks und wenigstens eines zugeordneten Antriebs um eine gegenüberliegende Kante anhebbar ist. Solche Deckelelemente, wie sie z. B. ein Kofferraumdeckel oder ein Verdeckheckkastendeckel oder ein diese beiden Funktionen kombinierender heckseitiger Deckel des Fahrzeugs darstellen.

Häufig ist es gewünscht, ein Drehgelenk, welches an der der Drehachse des Deckelelements zugeordneten Kante zur Festlegung des Deckelelements an der Fahrzeugkarosserie dient, möglichst platzsparend auszuführend. Hierbei ist es besonders vorteilhaft, wenn das wenigstens eine antreibbare Drehgelenk an einem Gestänge angreift, welches mit einem Ende an der Fahrzeugkarosserie gelenkig festgelegt ist und mit dem anderen Ende an einem in Fahrzeuglängsrichtung beabstandet zu einer Drehachse des Deckelelements liegenden Bereichs des Deckelelements gelenkig festgelegt ist.

Auf diese Weise wird das wenigstens eine antreibbare Drehgelenk aus dem Bereich der gelenkigen Anbindung an die Fahrzeugkarosserie herausverlagert, so dass diese mit geringstem Bauraumbedarf beispielsweise mit einem Schwanenhalslager ausführbar ist.

Durch die räumliche Distanz des wenigstens einen antreibbaren Drehlagers zu der passiven Anlenkung des Deckelelements an die Fahrzeugkarosserie kann der Bereich der Anlenkung auch als ein Wasserkanal ausgebildet sein, ohne dass deswegen zusätzliche Maßnahmen zum Schutz von elektrischen Bauteilen vor Feuchtigkeit ergriffen werden müssen.

Des Weiteren kann es vorgesehen sein, dass das Gestänge mit dem wenigstens einen aktiven Drehgelenk aus zwei miteinander verbundenen Hebeln gebildet ist, welche unterschiedlich lang sind, wobei das Deckelelement in seiner Schließstellung durch Verschwenken des Gestänges in eine Übertotpunktstellung verriegelbar ist. Bei einer derartigen Verschwenkbarkeit des Gestänges wird ohne zusätzliche Verriegelungsmittel eine Verschlussmöglichkeit geschaffen, da in Übertotpunktstellung das Deckelelement nicht mehr zu öffnen ist.

Weitere Vorteile und vorteilhafte Ausgestaltungen des Gegenstandes nach der Erfindung sind der Beschreibung, der Zeichnung und den Patentansprüchen entnehmbar.

Mehrere Ausführungsbeispiele einer Vorrichtung nach der Erfindung sind in der Zeichnung schematisch vereinfacht dargestellt und werden in der nachfolgenden Beschreibung näher erläutert.

Es zeigt:
- Fig. 1: eine vereinfachte dreidimensionale Ansicht eines Verdecks für ein Cabriolet-Fahrzeug in Alleinstellung, wobei sich das Verdeck in Schließstellung befindet;
- Fig. 2: eine vereinfachte Draufsicht auf einen Elektromotor und zwei hiermit wirkverbundene Drehgelenke eines Dachelementes des Verdecks gemäß Fig. 1;
- Fig. 3: eine vereinfachte, teilweise geschnittene Seitenansicht eines Drehgelenks gemäß Fig. 1 und Fig. 2;
- Fig. 4: eine weitere teilweise geschnittene Seitenansicht des Drehgelenks gemäß Fig. 3;
- Fig. 5: einen Schnitt durch das Drehgelenk der Fig. 3 und Fig. 4 entlang einer Linie A-A in Fig. 3;
- Fig. 6: einen Schnitt durch das Drehgelenk der Fig. 3 und Fig. 4 entlang einer Linie B-B in Fig. 4;
- Fig. 7: eine vereinfachte dreidimensionale Darstellung einer Anbindung eines Spannbügels des Verdecks gemäß Fig. 1 in Alleinstellung;
- Fig. 8.1 bis 8.11: jeweils eine schematisierte Positionsskizze der Dachelemente des Verdecks gemäß Fig. 1 während eines ersten Bewegungsablaufs zur Verdecköffnung;
- Fig. 9.1 bis 9.13: jeweils eine schematisierte Positionsskizze der Dachelemente des Verdecks gemäß Fig. 1 während eines zweiten Bewegungsablaufs zur Verdecköffnung;

- Fig. 10.1 bis 10.12: jeweils eine schematisierte Positionsskizze der Dachelemente des Verdecks gemäß Fig. 1 während eines dritten Bewegungsablaufs zur Verdecköffnung;
- Fig. 11.1 bis 11.5: jeweils eine schematisierte Positionsskizze der Dachelemente des Verdecks gemäß Fig. 1 während eines vierten Bewegungsablaufs zur Verdecköffnung; und
- Fig. 12.1 bis 12.3: jeweils eine schematisierte Positionsskizze eines Verdeckkastendeckels während eines Bewegungsablaufs zwischen einer geöffneten Stellung des Verdeckkastendeckels und einer verriegelten Schließstellung.

Bei den nachfolgend beschriebenen Ausführungen einer erfindungsgemäßen Vorrichtung dient diese zur Betätigung eines schwenkbaren Fahrzeugaußenelements, welches hier jeweils als ein Verdeckelement eines Verdeckelements eines Verdecks 1 eines Cabriolet-Fahrzeugs 2 ausgebildet ist.

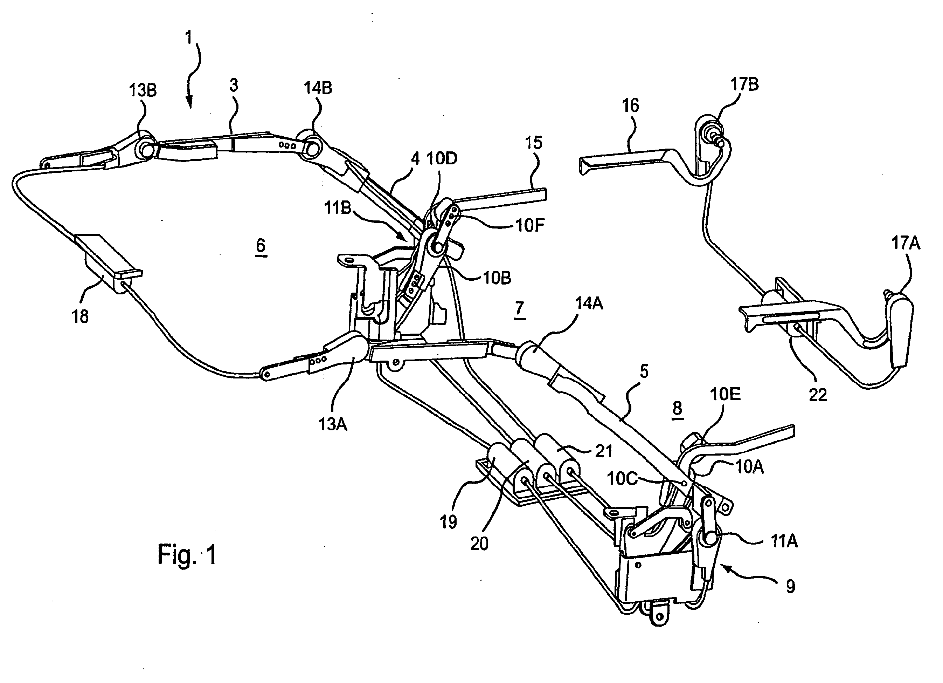

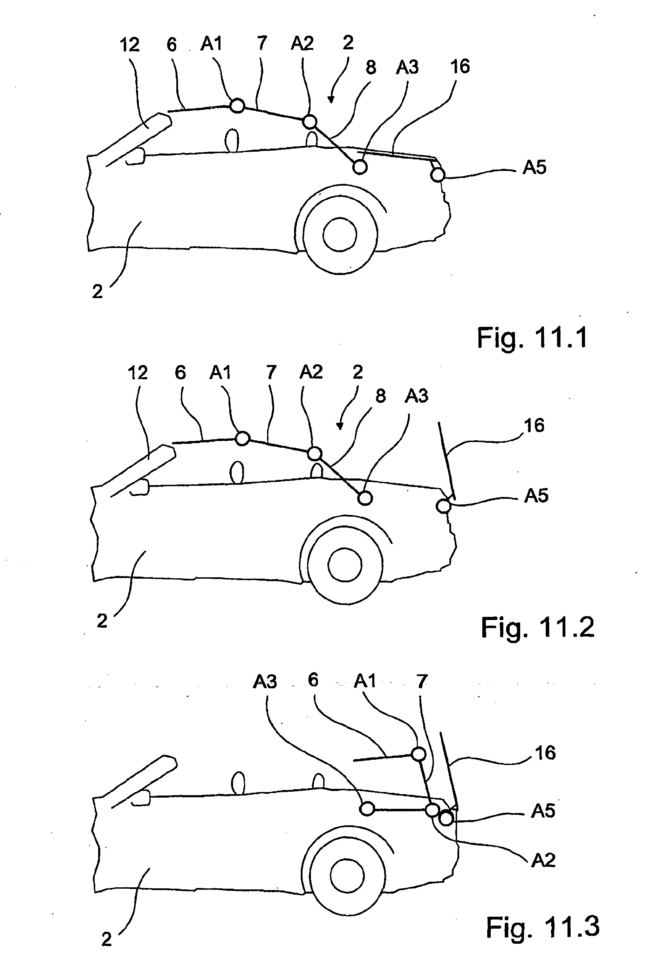

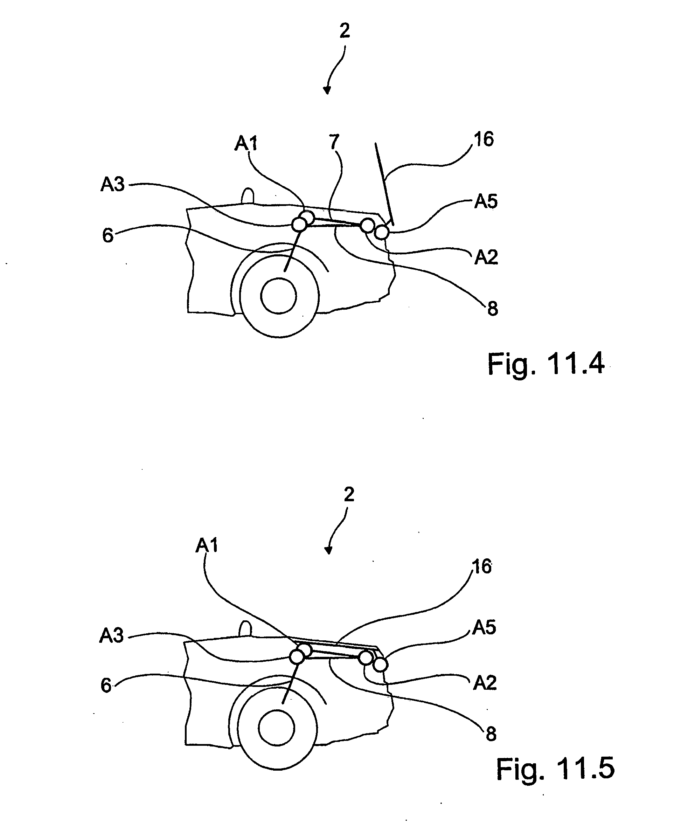

In Fig. 1 ist das Verdeck 1 für das insgesamt mit 2 bezeichnete, in den Fig. 11.1 bis 11.5 näher gezeigte Cabriolet-Fahrzeug 2 dargestellt, welches drei zusammenfaltbare, durch bezüglich einer Fahrzeuglängsachse gegenüberliegende äußere Dachrahmenprofilpaare 3, 4, 5 begrenzte Dachelemente 6, 7, 8 aufweist.

Bei dem in den Figuren gezeigten Verdeck 2 handelt es sich jeweils um ein so genanntes Hard-Top-Klappdach mit einem im geschlossenen Zustand an einen Windschutzscheibenrahmen 12 grenzenden Front-Dachelement 6, einem mittleren Dachelement 7 und einem Heck-Dachelement 8.

Die nachstehenden Ausführungen treffen jedoch ebenso auf ein Verdeck mit einer fest auf biegesteife, rahmenartige Dachelemente aufgespannten Textildachhaut zu, da derartige rahmenartige Dachelemente den vorliegend beschriebenen biegesteifen Dachelementen 6, 7, 8 entsprechen.

Wie der Fig. 1 zu entnehmen ist, ist das heckseitig das Verdeck 2 begrenzende Heck-Dachelement 8 an einem Hauptlager 9 schwenkbar an zwei symmetrisch angeordneten Gelenkpunkten mittels dort angeordneter Drehgelenke 11A, 11B mit der Fahrzeugkarosserie verbunden.

Die Verbindung der Dachelemente 6, 7, 8 untereinander ist ebenfalls jeweils mittels Drehgelenken ausgeführt, wobei an einer ersten Drehachse A1 zwischen dem Front-Dachsegment 6 und dem mittleren Dachsegment 7 eine Paarung aus zwei Drehgelenken 13A, 13B und an einer zweiten Drehachse A2 zwischen dem mittleren Dachsegment 7 und dem Heck-Dachsegment 8 eine weitere Paarung zweier symmetrisch zu der Fahrzeuglängsachse angeordneter Drehgelenke 14A, 14B vorgesehen ist.

Weiterhin sind als schwenkbare Fahrzeugaußenelemente ein Spannbügel 15 des Verdecks 2 im Bereich des Hauptlagers 9 über weitere Paarungen an Drehgelenken 10A, 10B, 10C, 10D, 10E, 10F und ein heckseitig des Verdecks 2 angeordneter Verdeckkastendeckel 16, welcher einen Ablageraum für das Verdeck 2 in dessen geöffnetem Zustand verschließt, über zwei an dessen heckseitigem Ende angebrachte Drehgelenke 17A, 17B mit der Fahrzeugkarosserie schwenkbar verbunden.

Für jede Drehachse A1, A2, A3 der Dachelemente 6, 7, 8 sowie die Drehachse A4 des Spannbügels 15 und die Drehachse A5 des Verdeckkastendeckels 16 ist vorliegend ein separat ansteuerbarer Antrieb vorgesehen, welcher jeweils als ein mit einer zentralen elektrischen Steuereinheit verbundener Elektromotor 18, 19, 20, 21, 22 ausgebildet ist.

Das Moment der Elektromotoren 18 bis 22 ist bei der gezeigten Ausführung der Erfindung jeweils mittels biegsamer Wellen 23 in die hier baugleich ausgeführten Drehgelenke 10A, 10B, 11A, 11B, 13A, 13B, 14A, 14B, 17A, 17B einleitbar.

Bei der gezeigten Ausführung sind alle Elektromotoren 18, 19, 20, 21, 22 mit einer zentralen Steuereinheit verbunden, welche die Elektromotoren 18, 19, 20, 21, 22 steuert bzw. regelt.

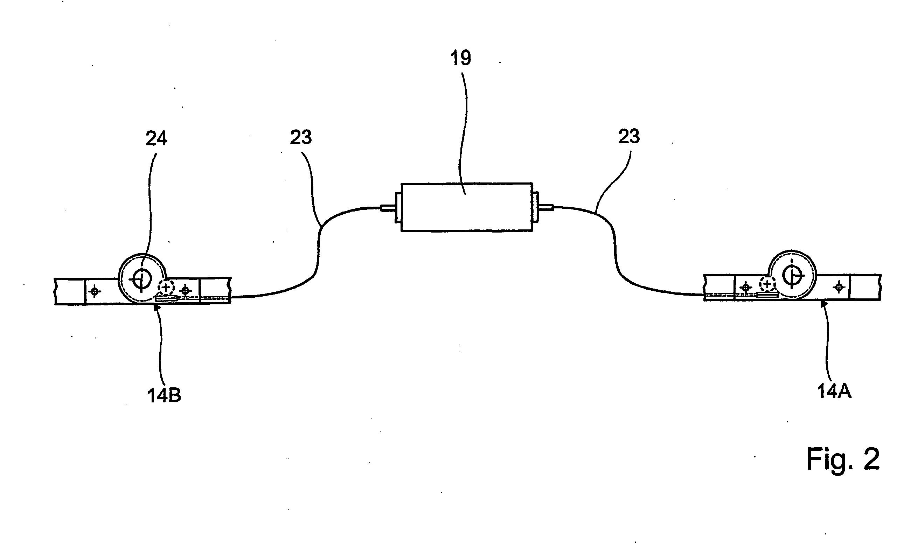

Die Fig. 2 zeigt exemplarisch in vereinfachter Weise den den Drehgelenken 14A, 14B zwischen dem Front-Dachelement 6 und dem mittleren Dachelement 7 zugeordneten Elektromotor 19, welcher wie die anderen Elektromotoren mit jeweils beiden bezüglich der Fahrzeuglängsachse gegenüber liegenden Drehgelenken 14A, 14B mittels biegsamer Wellen 23 verbunden ist.

Die gezeigten Elektromotoren 18 bis 22 sind jeweils als DC-Motoren ausgebildet und bezüglich der Fahrzeuglängsachse zentral angeordnet, jedoch ist in einer hiervon abweichenden Ausgestaltung auch eine dezentrale Anordnung eines Elektromotors und dessen Verbindung mit nur einem Drehgelenk möglich.

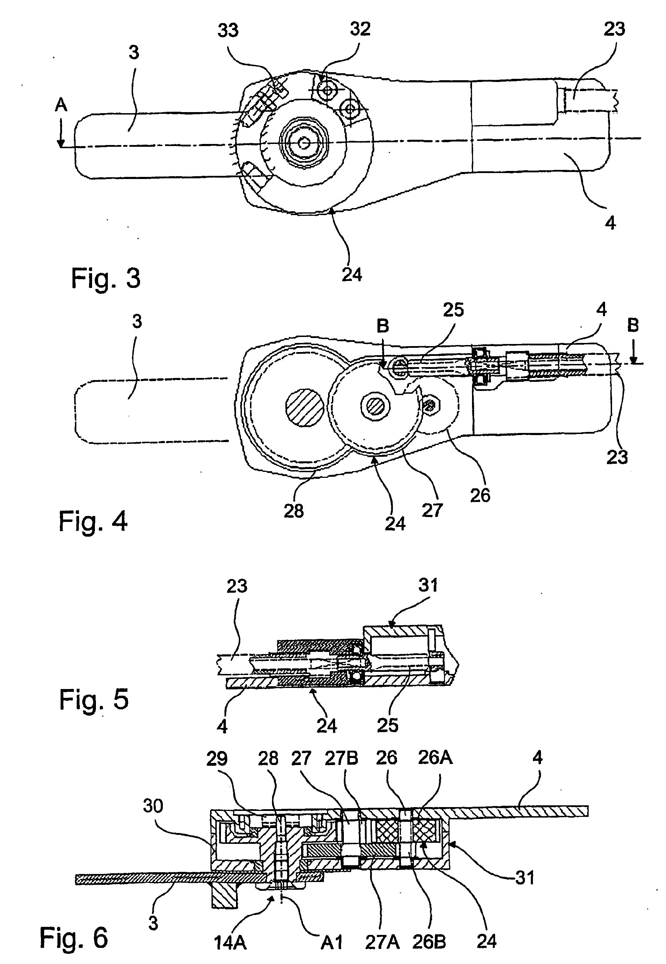

Die Drehgelenke 14A, 14B weisen jeweils eine als Untersetzungsgetriebe ausgebildete Getriebeeinrichtung 24 auf, mittels der sie mit dem betreffenden Elektromotor 19 verbunden sind, und welche in den Fig. 3 bis Fig. 6 näher dargestellt ist.

Die Getriebeeinrichtung 24 ist zwischen einem Hebel bzw. Dachrahmenteil 3 des Front-Dachelementes 6 und einem Hebel bzw. Dachrahmenteil 4 des mittleren Dachelementes 7 angeordnet, wobei der Hebel 4 des mittleren Dachrahmenteils 7 im Bereich der Getriebeeinrichtung 24 schalenartige ausgebildet ist und ist und mit einem zwischen dem Hebel 4 und dem Hebel 3 des Front-Dachelements angeordneten Schalenteil 30 eine Lagerschale 31 für eine Hülsenkupplung bildet.

Wie insbesondere den Fig. 4 und Fig. 5 zu entnehmen ist, ist die biegsame Welle 23 mit einer an dem Hebel 4 des mittleren Dachelements 7 gelagerten Schnecke 25 der Getriebeeinrichtung 24 drehverbunden. Die Schnecke 25 steht mit einem ersten, vorliegend aus Geräuschgründen aus Kunststoff ausgebildeten Zahnrad 26 in Eingriff, welches gestuft mit einer ersten, mit der Schnecke 25 in Eingriff stehenden Zahnradstufe 26A und einer zweiten Zahnradstufe 26B kleineren Durchmessers ausgebildet ist. Die zweite Zahnradstufe 26B steht in Eingriff mit einem zweiten Zahnrad 27 bzw. einer ersten Zahnradstufe 27A desselben, deren Durchmesser größer als die erste Zahnradstufe 26A des ersten Zahnrades 26 ist. Sowohl das erste Zahnrad 26 als auch das zweite Zahnrad 27 sind beidendig in der Lagerschale 31 gelagert.

Über eine zweite Zahnradstufe 27B, welche kleiner ist als die erste Zahnradstufe 27A des zweiten Zahnrades 27, jedoch größer als die zweite Zahnradstufe 26B des ersten Zahnrades 26 ist, kämmt das zweite Zahnrad 27 mit einem dritten Zahnrad 28, dessen Achse die erste Drehachse A1 bildet und welches drehfest mit dem Hebel 3 des Front-Dachteils 6 verbunden ist.

Eine Selbsthemmung der Getriebeeinrichtung 24 wird bei der dargestellten Ausführung über die Auslegung der Steigung der Schnecke 25 erreicht. Zusätzlich oder alternativ kann diese Wirkung auch mit Bremsen an den Elektromotoren 18 bis 22 erreicht werden.

Die durch die Drehgelenke 14A, 14B verbundenen Dachelemente 6, 7 bzw. deren Hebel 3, 4 sind gegeneinander wenigstens annähernd um 360° drehbar, wobei an dem Drehgelenk 14A bzw. 14B ein mittels einer Stellschraube 33 verstellbarer Anschlag 32 vorgesehen ist.

An dem Drehgelenk 14A bzw. 14B ist wie bei den übrigen Drehgelenken ein Positionserkennungssensor 29 zur Ermittlung der Position des Verdecks 2 bzw. seiner Dachelemente angeordnet, wobei der Positionserkennungssensor 29 vorliegend als ein Potentiometer ausgebildet ist.

Der Positionserkennungssensor 29 ist bei der gezeigten Ausführung auf einfache Art und Weise auf einen Mitnehmer aufgesetzt, welcher in der Getriebeeinrichtung des jeweiligen Drehgelenks koaxial zu der jeweiligen Drehachse vorgesehen ist.

Alternativ zu einer Positionserkennung mittels eines Potentiometers sind selbstverständlich auch andere analoge und digitale Systeme anwendbar, wie z. B. Inkrementalgeber, Neigungssensoren oder Hallsensoren.

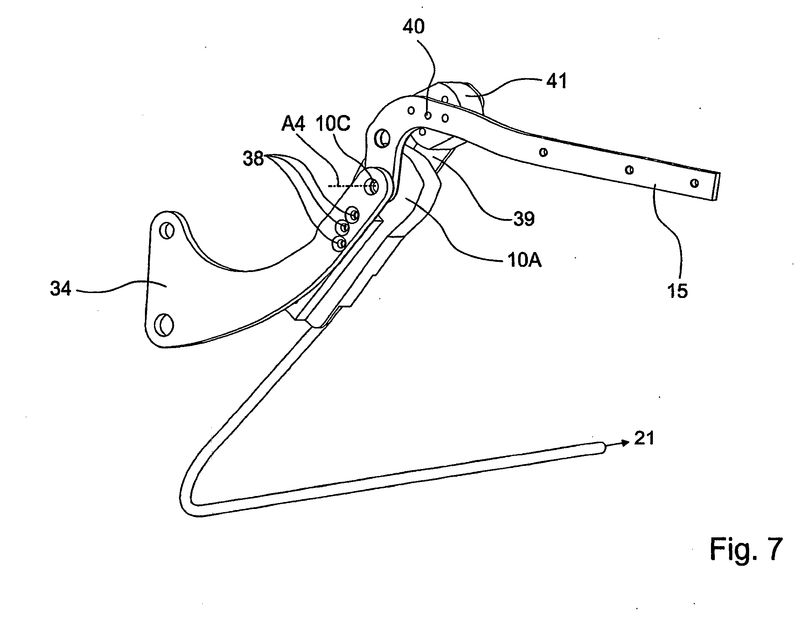

In Fig. 7 ist in vergrößerter Alleinstellung die Anbindung des Spannbügels 15 an die Fahrzeugkarosserie 9 bzw. ein hiermit verbundenes Hebelelement 34 gezeigt. Im Unterschied zu den Verbindungen der Dachelemente 6, 7, 8 untereinander und deren Anbindung an die Fahrzeugkarosserie 9 sowie die Anbindung des Verdeckkastendeckels 16 an die Fahrzeugkarosserie 9 kommen hier nicht nur direkt angetriebene aktive Drehgelenke, deren Drehachse auch die Drehachse A1, A2, A3, A5 der zugeordneten Verbindung ist, zum Einsatz.

Die Verbindung des Spannbügels 15 mit der Fahrzeugkarosserie 9 bzw. dem Hebelelement 34 ist sowohl mit von dem Elektromotor 21 direkt angetriebenen, aktiven Drehgelenken 10A, 10B als auch mit zwei Paarungen passiver Drehgelenke 10C, 10D und 10E, 10F ausgebildet, wobei die passiven Drehgelenke 10C, 10D, von denen in Fig. 7 das Drehgelenk 10C ersichtlich ist, die Drehachse A4 der Verbindung bilden.

Das aktive Drehgelenk 10A ist an dem mit der Fahrzeugkarosserie verbundenen Hebelelement 34 vorliegend über Schraubverbindungen 38 befestigt. Das Drehmoment des Drehgelenks 10A wird über einen Hilfshebel 39 an ein an dem Spannbügel 15 über Anbindungen 40 fixiertes Überbrückungselement 41 und somit an den Spannbügel 15 übertragen. Mit einer derartigen Ausgestaltung der Verbindung muss das angetriebene Drehgelenk 10A bzw. das hierzu spiegelbildliche Drehgelenk 10B im Wesentlichen nur auf das erforderliche, zu übertragende Drehmoment und nicht auf weitere im Gelenkpunkt auftretende Kräfte hin ausgelegt werden.

Abweichend von der in Fig. 1 gezeigten Ausführung können selbstverständlich auch weitere Verbindungen zwischen den Verdeckelementen und insbesondere den Verdeckelementen und der Fahrzeugkarosserie mit aktiven und passiven Drehgelenken gemäß dem in Fig. 7 gezeigten Ausführungsbeispiel ausgestaltet sein.

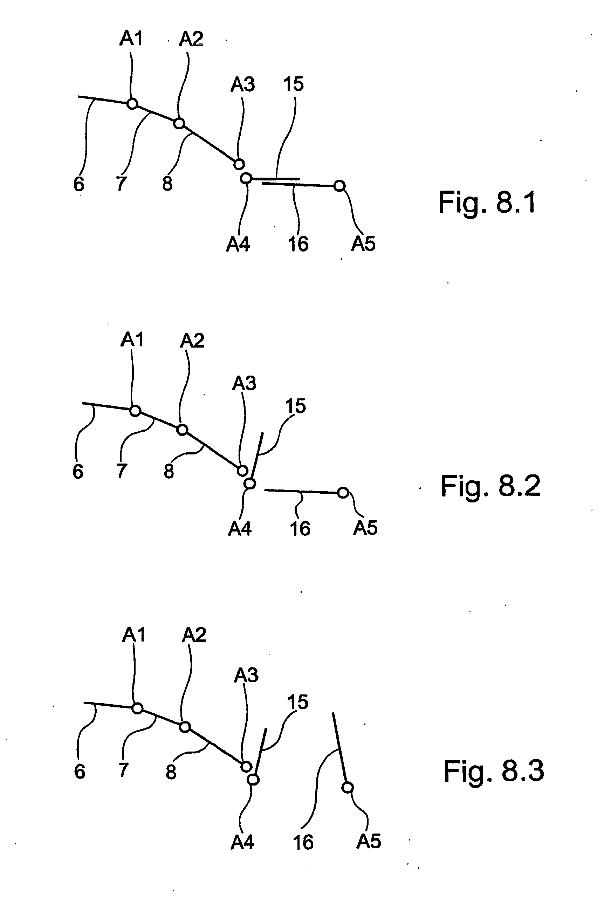

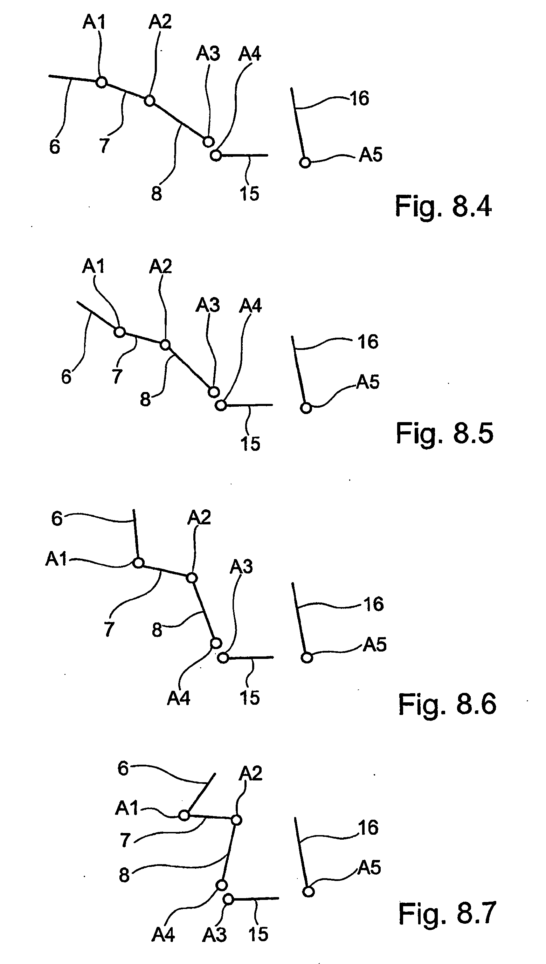

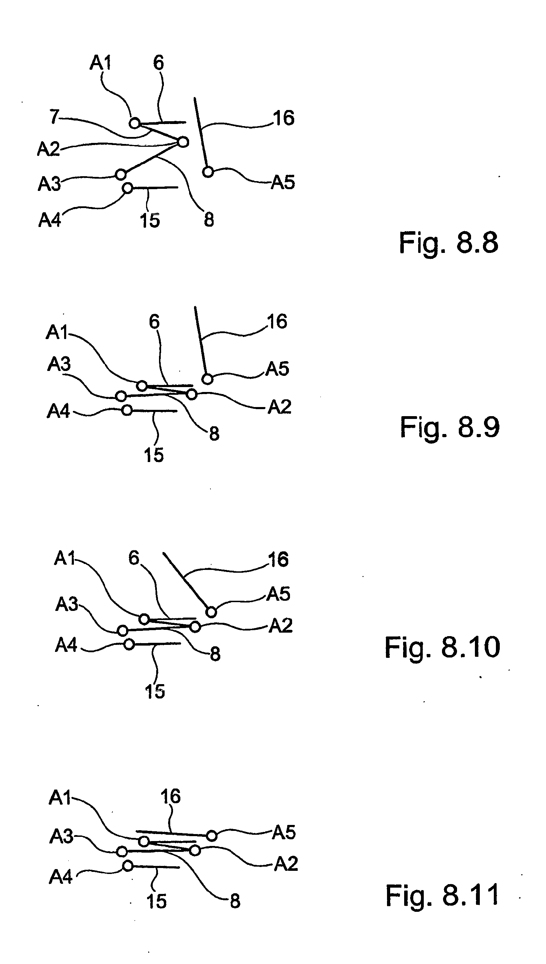

Bezug nehmend auf die Fig. 8.1 bis Fig. 8.12 ist jeweils ein Bewegungsablauf des Verdecks 2 bei einer Öffnungsbewegung dargestellt. Dabei zeigen die Fig. 8.1 bis Fig. 8.11 eine Öffnungsbewegung mit Bahnkurven, wie sie bei konventionellen, hydraulisch angetriebenen Verdecken üblich sind.

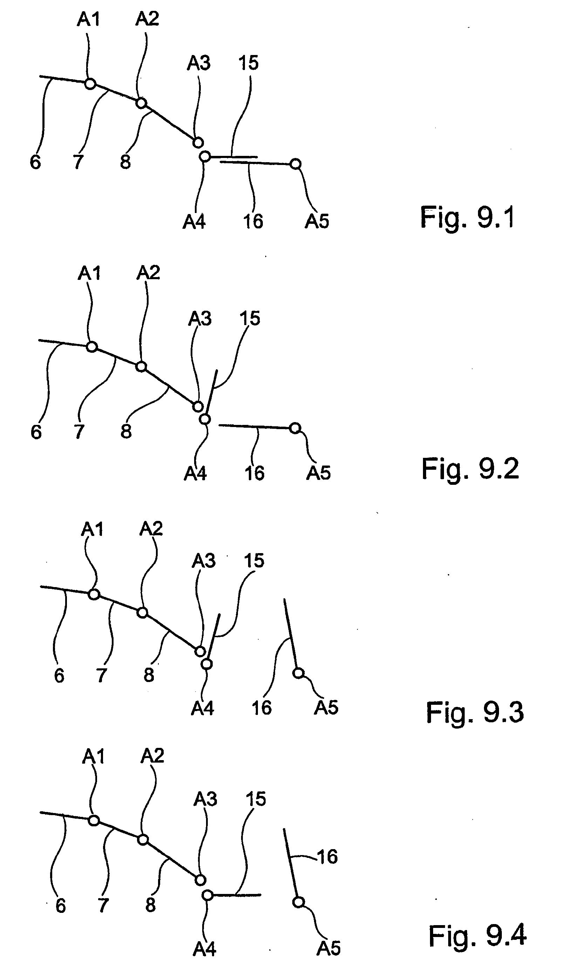

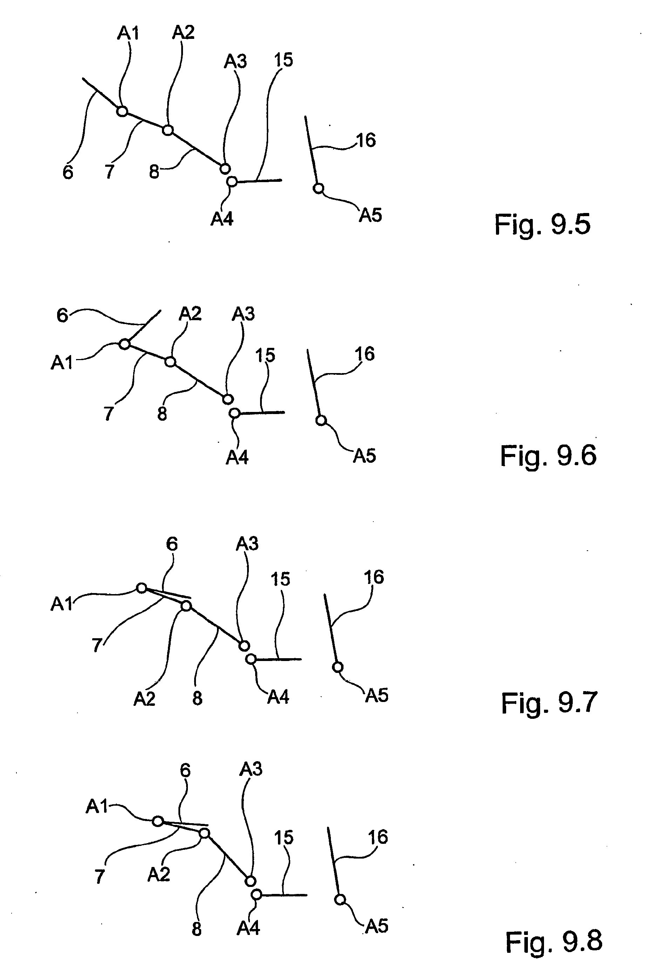

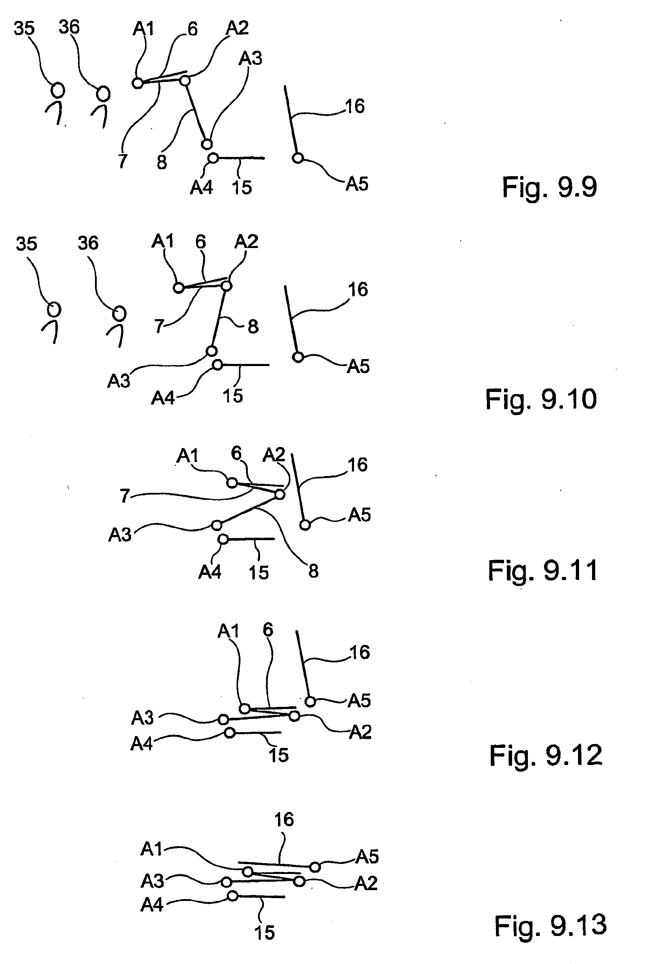

In den Fig. 9.1 bis Fig. 9.13 ist hingegen eine mit dem erfindungsgemäßen Verdeck mögliche, deutlich flachere Verdeckbewegung gezeigt, bei der im Fondbereich des Fahrzeuges noch ausreichend Kopfhöhe für sich darin befindliche Passagiere gegeben ist.

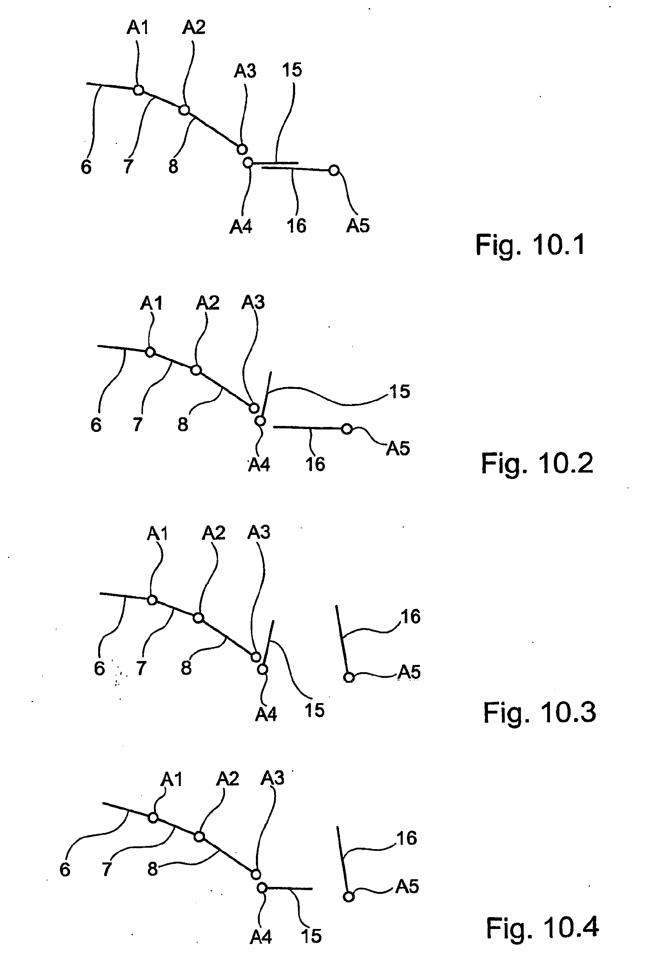

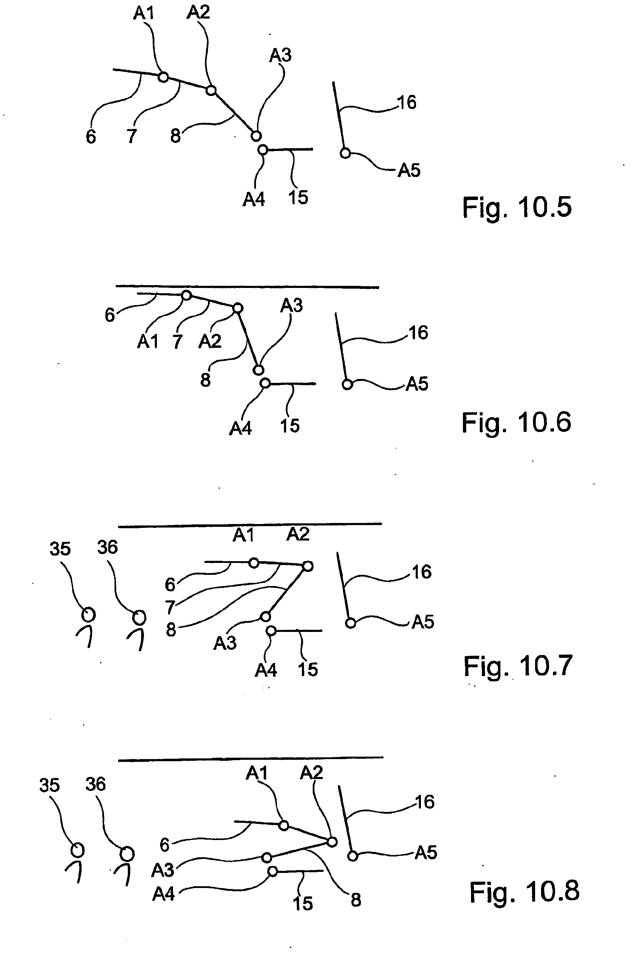

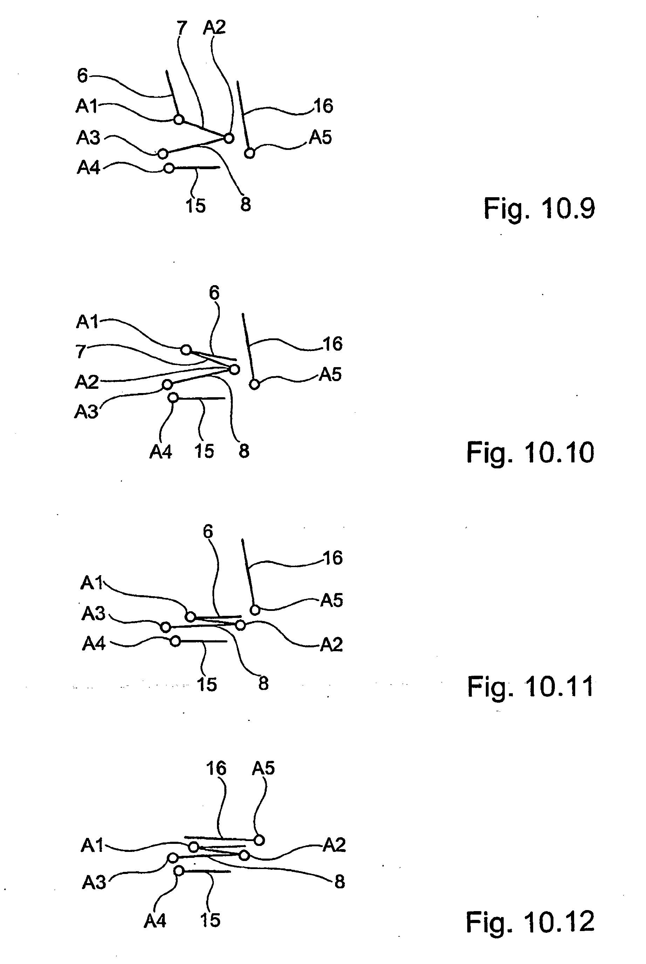

Die Fig. 10.1 bis Fig. 10.12 zeigen eine Verdecköffnungsbewegung mit einer noch niedrigeren Bahnkurve wie sie bei einem freien Fondbereich angesteuert werden kann und gegebenenfalls auch während der Fahrt des Fahrzeugs möglich ist, da mit dieser Öffnungsbewegung eine sehr geringe Windangriffsfläche und damit ein sehr niedriger Luftwiderstand realisierbar ist.

Bei jeder der in den Fig. 8.1 bis Fig. 10.12 dargestellten Verdeckbewegungen sind die drei Dachelemente 6, 7, 8 S-artig derart zusammenfaltbar, dass das Front-Dachelement 6 in einer Faltstellung bei geöffnetem Verdeck 2 heckwärts verschwenkt über dem mittleren Dachelement 7 und dem darunter liegenden, ebenfalls gegenüber seiner Stellung bei geschlossenem Verdeck 2 heckwärts verschwenkten Heck-Dachelement 8 abgelegt ist.

Bei einer Öffnungsbewegung des Verdecks 2 wird zunächst der Spannbügel 15 zur Freigabe einer Aufschwenkbewegung des Verdeckkastendeckels 16 angehoben und nach Aufstellung des Verdeckkastendeckels 16 wieder abgesenkt, wonach die Dachelemente 6, 7, 8 auf dem Spannbügel 15 abgelegt werden.

Die Öffnungsbewegung des Verdecks 2 ist dabei jeweils derart angesteuert, dass das Front-Dachelement 6 um die erste Gelenkachse A1 hoch und heckwärts verschwenkt, das mittlere Dachsegment 7 um dessen heckseitige, zweite Drehachse A2 und das Heck-Dachelement 8 um dessen heckseitige, dritte Drehachse A3 heckwärts verschwenkt.

Insbesondere Bezug nehmend auf die eine Ansteuerung mit konventionellen Bahnkurven der Dachelemente 6, 7, 8 darstellenden Fig. 8.1 bis Fig. 8.11 ist ersichtlich, dass das Hoch-und Rückschwenken des Front-Dachelementes 6 an der ersten Drehachse A1 im Wesentlichen während der Verschwenkung des mittleren Dachelementes 7 und des Heck-Dachelementes 8 erfolgt, wobei das Heck-Dachelement 8 bei Heckwärtsbewegung der zweiten Drehachse A1 heckwärts umgeklappt wird und das seine Winkelstellung während der Öffnungsbewegung nur unwesentlich ändernde mittlere Dachelement 7 darauf abgelegt wird.

In Fig. 9.1 bis 9.13 ist eine gegenüber der Ansteuerung gemäß Fig. 8.1 bis Fig. 8.11 flachere Verdeckbewegung gezeigt, bei der die Verschwenkung bzw. Klappung des Front-Dachelements 6 um die erste Drehachse A1 hoch und heckwärts im Wesentlichen vor der Verschwenkung des mittleren Dachelements 7 und des Heck-Dachelements 8 in einer Weise gemäß Fig. 8.1 bis Fig. 8.11 erfolgt.

In den Fig. 9.9 und Fig. 9.10 sind prinzipmäßig ein Vordersitz-Passagier 35 und ein Fond-Passagier 36 gezeigt, für die ausreichend Raum im Kopfbereich während dieser Öffnungsbewegung des Verdecks 2 besteht.

Die in den Fig. 10.1 bis Fig. 10.12 gezeigte Verdecköffnungsbewegung unterscheidet sich von einer in den Fig. 9.1 bis Fig. 9.13 gezeigten Öffnungsbewegung durch deutlich flachere Bahnkurven der Dachelemente 6, 7, 8, welche insbesondere dadurch erzielt werden, dass die Verschwenkung des Front-Dachelements 6 um die erste Drehachse A1 erst nach einer weitgehenden Heckwärtsverschwenkung des mittleren Dachelements 7 und des Heck-Dachelementes 8 bzw. der zweiten Drehachse A1 erfolgt.

Eine solche Ansteuerung erfolgt vorliegend in Abhängigkeit des über eine an sich bekannte Abstandserkennungssensorik ermittelten Abstandes zu einem z. B. eine Garagendecke 37 gemäß Fig. 10.6 bis Fig. 10.8 darstellenden Höhenhindernis. Aufgrund der hier eingeschränkten Höhe im Fond-Bereich wird diese Ansteuerung nur zugelassen, wenn über ein Sitzbelegungserkennung ermittelt wird, dass sich kein Passagier 36 im Fondbereich befindet.

Eine weitere vorteilhafte Verdeckbewegung, welche mit dem Verdeck 2 gemäß der Erfindung realisierbar ist, ist in den Fig. 11.1 bis 11.5 gezeigt.

Bei dieser Öffnungsbewegung des Verdecks 2 wird zunächst das mittlere Dachsegment 7 um dessen heckseitige, zweite Drehachse A2 und das Heck-Dachelement 8 um dessen heckseitige, dritte Drehachse A3 heckwärts verschwenkt, während die Winkellage des Front-Dachelements 6 im Wesentlichen gleich bleibt. In wenigstens annähernd horizontaler Position des Heck-Dachelementes 8 gemäß Fig. 11.3 werden das Front-Dachelement 6 und das mittlere Dachelement 7 derart abgelegt, dass das mittlere Dachelement 7 auf dem Heck-Dachelement 8 und wenigstens annähernd parallel zu diesem sowie das Front-Dachelement 6 demgegenüber nach unten in eine wenigstens annähernd vertikale Lage verschwenkt wird.

Auf diese Weise kann das Front-Dachelement 6 raumsparend im abgelegten Zustand des Verdecks 2 wenigstens annähernd parallel zu einer Rückbanklehne abgelegt werden.

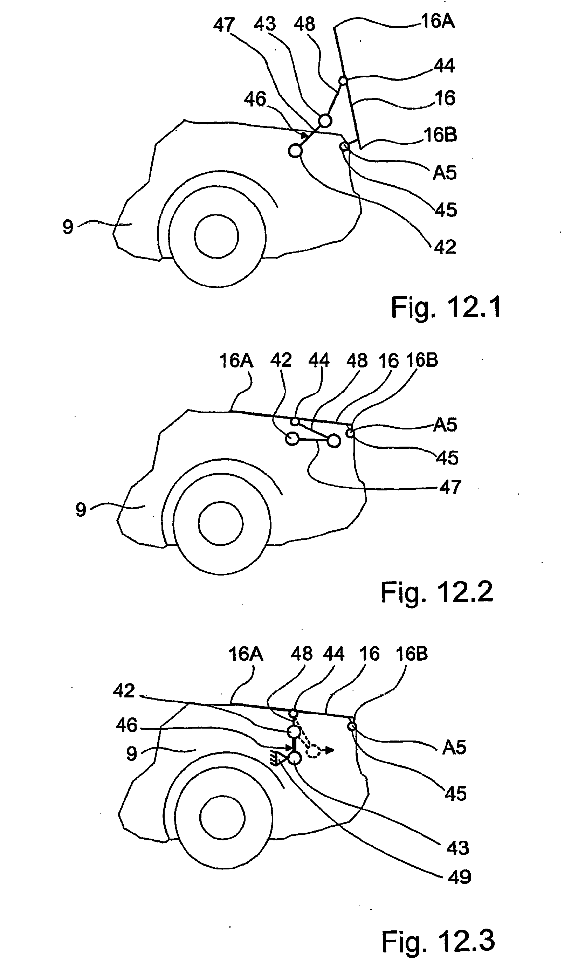

Die Fig. 12.1 bis 12.3 zeigen prinzipmäßig einen alternativen Antrieb für den Verdeckkastendeckel 16, welcher hier gleichzeitig als ein Heckdeckel ausgelegt sein kann. Es handelt sich somit bei dem Verdeckkastendeckel 16 um ein Deckelelement, welches aus einer Schließstellung wenigstens an einer Kante, wie z. B. an der Fahrzeugfrontseitigen Kante 16A durch Verschwenkung mittels antreibbarer Drehgelenke 42, 43 und eines zugeordneten Antriebs 22 um eine gegenüber liegende Kante, hier die heckseitige Kante 16B, anhebbar ist.

Die antreibbaren Drehgelenke 42, 43 greifen hier an einem aus zwei Hebeln 47, 48 gebildeten Gestänge 46 an, welches mit einem Ende an der Fahrzeugkarosserie 9 gelenkig festgelegt ist und mit dem anderen Ende an einem in Fahrzeuglängsrichtung beabstandet zur Drehachse A5 des Verdeckkastendeckels 16 liegenden Bereich des Verdeckkastendeckels 16 gelenkig festgelegt ist.

Bei der gezeigten Ausführung ist die Anlenkung des Gestänges 46 bzw. des ersten Hebels 47 an die Fahrzeugkarosserie 9 und die Verbindung der Hebel 47 und 48 untereinander jeweils als antreibbares, über eine nicht näher dargestellte Biegewelle mit einem Elektromotor verbundenes Drehgelenk 42 bzw. 43 ausgebildet, während die Anbindung des Gestänges 46 bzw. des zweiten Hebels 48 an den Verdeckkastendeckel 16 als passives Drehgelenk 44 konventioneller Bauart ausgestaltet ist.

Je nach gewünschtem Bewegungsverlauf und geometrischen Gegebenheiten kann es auch vorteilhaft sein, die Anbindung des Gestänges 46 an den Verdeckkastendeckel 16 mit einem antreibbaren Drehgelenk auszugestalten.

Die Anlenkung des Verdeckkastendeckels 16 im Bereich der Drehachse 5 an der heckseitigen Kante 16B des Verdeckkastendeckels 16 ist optional und vorliegend als passives Drehgelenk 45 ausgebildet.

Insbesondere bei Ausführungsvarianten, bei denen sich heckseitig an den Verdeckkastendeckels 16 ein weiterer Heckdeckel bzw. Kofferraumdeckel anschließt, ist es vorteilhaft, die Anlenkung des Verdeckkastendeckels 16 im Bereich seiner Drehachse A5 mittels eines raumsparenden so genannten Schwanenhalslagers auszuführen, welches zwischen einem Anlenkpunkt und der Befestigung an dem Verdeckkastendeckel in Fahrzeuglängsrichtung derart gekrümmt ist, dass es einer angrenzenden fahrzeugfrontseitigen Kante eines Heckdeckels bei einer Verschwenkung ausweichen kann. Dabei kann das Schwanenhalslager auch in einem Wasserkanal angeordnet sein.

Wenn der Verdeckkastendeckels 16 an einer in Fig. 12.1 gezeigten geöffneten Stellung in eine in Fig. 12.2 gezeigte Schließstellung überführt wird, wird durch Ansteuerung des Fahrzeug fest gelagerten Drehgelenks 42 und des die Hebel 47, 48 des Gestänges 46 verbindenden Drehgelenks 43 der Verdeckkastendeckels 16 von einer annähernd vertikalen Position in eine annähernd horizontale Position abgesenkt, wobei in der in Fig. 12.2 gezeigten Schließstellung durch ein geeignetes Verschlusselement eine Verriegelung bereitgestellt werden kann.

Bei der vorliegenden Ausführung sind die Hebel 47, 48 des Gestänges 46 unterschiedlich lang ausgebildet, wodurch das Gestänge 46 in eine Art Totpunktendlage gebracht werden kann bzw. in eine Übertotpunktstellung überführbar ist. Bei der in der Fig. 12.3 gezeigten Übertotpunktstellung des Gestänges 46, in der das die Hebel 47, 48 verbindende Gelenk 43 und der an dem Verdeckkastendeckel 16 angelenkte Hebel 48 in Fahrzeugfrontrichtung geringfügig vor dem das Gestänge 46 an der Fahrzeugkarosserie 9 festlegenden Drehgelenk 43 positioniert ist, ist ein Anheben des Verdeckkastendeckels 16 von außen nicht möglich, so dass eine Verriegelung des Verdeckkastendeckels 16 ohne weitere Verschlusselemente realisiert ist.

Um die Position des Gestänges 46 in diese Verriegelungsstellung genau zu definieren, ist ein Anschlag 49 vorgesehen, an dem das Gestänge 46 in Verriegelungsstellung zur Anlage kommt.

Alternativ zu der in Fig. 12.3 gezeigten Übertotpunktstellung kann in einer anderen Ausführung gegebenenfalls der Anschlag 49 so positioniert sein, dass sich das Gestänge 46 in einer Totpunktstellung befindet.

Um im Falle eines Stromausfalls eine Notbetätigung zu ermöglichen, sind die antreibbaren Drehgelenke 42, 43 hinsichtlich ihrer Selbsthemmung so ausgelegt, dass sie in deaktiviertem Zustand manuell verstellbar sind. Die Selbsthemmung der Drehgelenke 42, 43 ist somit derart definiert, dass sie einerseits eine Verstellung von Hand erlaubt, andererseits jedoch ausreichend ist, um das Deckelelement 16 in seiner Endlage zu halten.

Zur Notentriegelung kann das Gestänge 46, wie in Fig. 12.3 strichliert gezeigt, heckwärts verschwenkt werden, um den Verdeckkastendeckel 16 für eine manuelle Öffnung freizugeben. Die Zugriffsmöglichkeit kann hierbei durch einen Durchgriff seitens der Fahrzeuginnenseite bei der gezeigten Ausführung oder bei einer Ausführung mit einem angrenzenden Heckdeckel und einem heckseits angrenzenden Kofferraum seitens des Kofferraums realisiert sein.

Es versteht sich, dass neben einer Notentriegelung auch eine Notverriegelung mit entgegengesetzter manueller Betätigung des Gestänges 46 möglich ist.

Die bei der Ausführung nach Fig. 12.1 bis 12.3 verwendeten antreibbaren Drehgelenke 42, 43 entsprechen vorliegend den in den zuvor beschriebenen Ausführungsbeispielen verwendeten Drehgelenken.

Bei sämtlichen in Zusammenhang mit der vorliegenden Erfindung verwendeten antreibbaren Drehgelenken kann es sich nicht nur um hier gezeigte scharnierartige Schwenk-Drehgelenke handeln, sondern auch um eine jede andere bekannte Gelenkart, wie z. B. ein Kugelgelenk, welches insbesondere bei einer Verschwenkung eines Fahrzeugaußenelements in Fahrzeugquerrichtung vorteilhaft sein kann.

### BEZUGSZEICHENLISTE

- 1: Verdeck
- 2: Cabriolet-Fahrzeug
- 3: äußeres Dachrahmenprofilpaar
- 4: äußeres Dachrahmenprofilpaar
- 5: äußeres Dachrahmenprofilpaar
- 6: Fahrzeugaußenelement, Verdeckelement, Front-Dachelement
- 7: Fahrzeugaußenelement, Verdeckelement, mittleres Dachelement
- 8: Fahrzeugaußenelement, Verdeckelement, Heck-Dachelement
- 9: Fahrzeugkarosserie, Hauptlager
- 10A: Drehgelenk
- 10B: Drehgelenk
- 10C: passives Drehgelenk
- 10D: passives Drehgelenk
- 10E: passives Drehgelenk
- 10F: passives Drehgelenk
- 11A: Drehgelenk
- 11B: Drehgelenk
- 12: Windschutzscheibenrahmen
- 13A: Drehgelenk
- 13B: Drehgelenk
- 14A: Drehgelenk
- 14B: Drehgelenk
- 15: Fahrzeugaußenelement, Verdeckelement, Spannbügel
- 16: Fahrzeugaußenelement, Deckelelement, Verdeckkastendeckel
- 16A: Kante
- 16B: Kante
- 17A: Drehgelenk
- 17B: Drehgelenk
- 18: Elektromotor
- 19: Elektromotor
- 20: Elektromotor
- 21: Elektromotor
- 22: Elektromotor
- 23: biegsame Welle
- 24: Getriebeeinrichtung
- 25: Schnecke
- 26: Zahnrad
- 26A: Zahnradstufe
- 26B: Zahnradstufe
- 27: Zahnrad
- 27A: Zahnradstufe
- 27B: Zahnradstufe
- 28: Zahnrad
- 29: Positionserkennungssensor
- 30: Schalenteil
- 31: Lagerschale
- 32: Anschlag
- 33: Stellschraube
- 34: Hebelelement
- 35: Vordersitz-Passagier
- 36: Fond-Passagier
- 37: Höhenhindernis, Garagendecke
- 38: Schraubverbindung
- 39: Hilfshebel
- 40: Anbindung
- 41: Überbrückungselement
- 42: Drehgelenk
- 43: Drehgelenk
- 44: Drehgelenk
- 45: Drehgelenk
- 46: Gestänge
- 47: Hebel
- 48: Hebel
- 49: Anschlag

- A1: Drehachse
- A2: Drehachse
- A3: Drehachse
- A4: Drehachse
- A5: Drehachse

## Patentansprüche

1. Vorrichtung zur Betätigung mehrerer schwenkbarer Fahrzeugaußenelemente (6, 7, 8, 15, 16), welche Verdeckelemente eines Verdecks (1) eines Cabriolet-Fahrzeugs (2) sind und wenigstens zusammenfaltbare Dachelemente (6, 7, 8) umfassen, von denen wenigstens ein Dachelement (8, 15, 16) schwenkbar mit der Fahrzeugkarosserie (9) verbunden ist, wobei die Verbindung der Verdeckelemente (6, 7, 8, 15, 16) untereinander bzw. gegenüber der Fahrzeugkarosserie jeweils wenigstens ein Drehgelenk (10A, 10B, 10C, 10D, 10E, 10F, 11A, 11B, 13A, 13B, 14A, 14B, 17A, 17B, 42, 43, 44, 45) und wenigstens einen Antrieb (18, 19, 20, 21, 22) vorsieht, wobei der Antrieb als ein Elektromotor (18, 19, 20, 21, 22) ausgebildet ist, welcher ein Antriebsmoment direkt in ein zugeordnetes Drehgelenk (10A, 10B, 11A, 11B, 13A, 13B, 14A, 14B, 17A, 17B; 42, 43) einleitet, wobei jeweils wenigstens ein Drehgelenk (10A, 10B, 11A, 11B, 13A, 13B, 14A, 14B, 17A, 17B, 42, 43) unterschiedlicher Verbindungen separat ansteuerbar ist,
**dadurch gekennzeichnet,**
**dass** jeder Verbindung der Verdeckelemente (6, 7, 8, 15, 16) untereinander bzw. mit der Fahrzeugkarosserie (9) um eine Drehachse (A1, A2, A3, A4, A5) ein Elektromotor (18, 19, 20, 21, 22) zugeordnet ist.

2. Vorrichtung nach Anspruch 1,
**dadurch gekennzeichnet,**
**dass** ein Moment des Elektromotors (18, 19, 20, 21, 22) mittels einer biegsamen Welle (23) in ein Drehgelenk (10A, 10B, 11A, 11B, 13A, 13B, 14A, 14B, 17A, 17B; 42, 43) einleitbar ist.

3. Vorrichtung nach Anspruch 1 oder 2,
**dadurch gekennzeichnet,**
**dass** jeweils wenigstens zwei bezüglich einer Fahrzeuglängsachse gegenüber liegende Drehgelenke (10A, 10B, 11A, 11B, 13A, 13B, 14A, 14B, 17A, 17B; 42, 43) mittels biegsamer Wellen (23) mit dem Elektromotor (19, 20, 21, 22) verbunden sind.

4. Vorrichtung nach einem der Ansprüche 1 bis 3,
**dadurch gekennzeichnet,**
**dass** wenigstens einige von mehreren Drehgelenken (10A, 10B, 11A, 11B, 13A, 13B, 14A, 14B, 17A, 17B; 42, 43) baugleich ausgeführt sind.

5. Vorrichtung nach einem der Ansprüche 1 bis 4,
**dadurch gekennzeichnet,**
**dass** das Drehgelenk (10A, 10B, 11A, 11B, 13A, 13B, 14A, 14B, 17A, 17B; 42, 43) mittels einer Getriebeeinrichtung (24) angetrieben ist, wobei die Getriebeeinrichtung (24) zwischen einem einem ersten Fahrzeugaußenelement (6) zugeordneten Hebel (3) und einem weiteren Hebel (4) eines zweiten Fahrzeugaußenelementes (7) angeordnet ist.

6. Vorrichtung nach Anspruch 5,
**dadurch gekennzeichnet,**
**dass** eine das Moment des Elektromotors (18, 19, 20, 21, 22) übertragende biegsame Welle (23) mit einer Schnecke (25) der Getriebeeinrichtung (24) drehverbunden ist, welche Schnecke (25) mit einem ersten, an einem der Hebel (4) gelagerten Zahnrad (26) in Eingriff steht, welches mit wenigstens einem zweiten Zahnrad (27) in Eingriff steht und mit dem zweiten Hebel (3) wirkverbunden ist.

7. Vorrichtung nach einem der Ansprüche 1 bis 6,
**dadurch gekennzeichnet,**
**dass** ein Positionserkennungssensor (29) an dem Drehgelenk (10A, 10B, 11A, 11B, 13A, 13B, 14A, 14B, 17A, 17B; 42, 43) angeordnet ist.

8. Vorrichtung nach Anspruch 7,
**dadurch gekennzeichnet,**
**dass** der Positionserkennungssensor (29) als ein Potentiometer ausgebildet ist, wobei in der Getriebeeinrichtung (24) des jeweiligen Drehgelenks (10A, 10B, 11A, 11B, 13A, 13B, 14A, 14B, 17A, 17B; 42, 43) koaxial zu der jeweiligen Drehachse (A1, A2, A3, A4, A5) ein Mitnehmer vorgesehen ist, auf dem der Potentiometer (29) angeordnet ist.

9. Vorrichtung nach einem der Ansprüche 1 bis 8,
**dadurch gekennzeichnet,**
**dass** an dem Drehgelenk (10A, 10B, 11A, 11B, 13A, 13B, 14A, 14B; 42, 43) ein verstellbarer, insbesondere mit einer Stellschraube (33) ausgebildeter Anschlag (32) vorgesehen ist.

10. Vorrichtung nach einem der Ansprüche 1 bis 9,
**dadurch gekennzeichnet,**
**dass** das Drehgelenk (10A, 10B, 11A, 11B, 13A, 13B, 14A, 14B; 42, 43) um wenigstens annähernd 360° drehbar ausgeführt ist.

11. Vorrichtung nach einem der Ansprüche 1 bis 10,
**dadurch gekennzeichnet,**
**dass** eine Verbindung der Verdeckelemente (6, 7, 8, 15, 16) untereinander bzw. mit der Fahrzeugkarosserie (9) durch wenigstens ein ansteuerbares Drehgelenk (10A, 10B; 42, 43) und wenigstens ein passives Drehgelenk (10C, 10D, 10E, 10F; 44, 45) gebildet wird, wobei die zugeordnete Drehachse (A4) der Verbindung eine Drehachse eines passiven Drehgelenks (10C, 10D) ist.

12. Vorrichtung nach einem der Ansprüche 1 bis 11,
**dadurch gekennzeichnet,**
**dass** mehrere Elektromotoren (18, 19, 20, 21, 22) mit einer zentralen elektrischen Steuereinheit verbunden sind.

13. Vorrichtung nach einem der Ansprüche 1 bis 12,
**dadurch gekennzeichnet,**
**dass** zumindest ein Teil der Elektromotoren je eine Steuereinheit aufweist, welche jeweils über einen Datenbus mit wenigstens einer weiteren Steuereinheit für wenigstens einen Elektromotor verbunden ist.

14. Vorrichtung nach einem der Ansprüche 1 bis 13,
**dadurch gekennzeichnet,**
**dass** drei Dachelemente (6, 7, 8) vorgesehen sind, welche S-artig derart zusammenfaltbar sind, dass ein Front-Dachelement (6) in einer Faltstellung bei geöffnetem Verdeck (2) heckwärts verschwenkt über einem mittleren Dachelement (7) und einem darunter liegenden, ebenfalls gegenüber seiner Stellung bei geschlossenem Verdeck heckwärts verschwenkten Heck-Dachelement (8) abgelegt ist und bei einer Öffnungsbewegung des Verdecks (2) das Front-Dachelement (6) um eine erste Drehachse (A1) hoch und heckwärts verschwenkt, das mittlere Dachelement (7) um dessen heckseitige, zweite Drehachse (A2) und das Heck-Dachelement um dessen heckseitige, dritte Drehachse (A3) heckwärts verschwenkt wird, wobei die Verschwenkung des Front-Dachelementes (6) wahlweise im Wesentlichen vor oder während oder nach der Verschwenkung des mittleren Dachelementes (7) und des Heck-Dachelementes (8) erfolgt.

15. Vorrichtung nach einem der Ansprüche 1 bis 14,
**dadurch gekennzeichnet,**
**dass** bei einer Öffnungsbewegung des Verdecks (2) zunächst ein Spannbügel (15) zur Freigabe einer Aufschwenkbewegung eines Verdeckkastendeckels (16) angehoben und nach Aufstellung des Verdeckkastendeckels (16) wieder abgesenkt wird, wonach die Dachelemente (6, 7, 8) auf dem Spannbügel (15) abgelegt werden.

16. Vorrichtung nach einem der Ansprüche 1 bis 13,
**dadurch gekennzeichnet,**
**dass** drei Dachelemente (6, 7, 8) derart faltbar sind, dass bei einer Öffnungsbewegung des Verdecks (2) zunächst ein mittleres Dachelement (7) um dessen heckseitige Drehachse (A2) und ein Heck-Dachelement (8) um dessen heckseitige Drehachse (A3) heckwärts verschwenkt wird; und in wenigstens annähernd horizontaler Position des Heck-Dachelementes (8) ein Front-Dachelement (6) und das mittlere Dachelement (7) derart abgelegt werden, dass das mittlere Dachelement (7) auf dem Heck-Dachelement (8) und wenigstens annähernd parallel zu diesem sowie das Front-Dachelement (6) demgegenüber nach unten in eine wenigstens annähernd vertikale Lage verschwenkt wird.

17. Vorrichtung nach einem der Ansprüche 1 bis 16,
**dadurch gekennzeichnet,**
**dass** bei einer Öffnungsbewegung des Verdecks (2) zunächst ein Verdeckkastendeckel (16) aufgeschwenkt und in Ablageposition der Dachelemente (6, 7, 8) in eine wenigstens annähernd horizontale Lage nach unten verschwenkt wird.

18. Vorrichtung nach einem der Ansprüche 1 bis 17,
**dadurch gekennzeichnet,**
**dass** wenigstens ein Fahrzeugaußenelement ein Deckelelement (16), insbesondere ein Verdeckkastendeckel oder Heckdeckel, ist, welches aus einer Schließstellung wenigstens an einer Kante (16A) durch Verschwenkung mittels wenigstens eines antreibbaren Drehgelenks (42, 43) und wenigstens eines zugeordneten Antriebs (22) um eine gegenüber liegende Kante (16B) anhebbar ist.

19. Vorrichtung nach Anspruch 18,
**dadurch gekennzeichnet,**
**dass** das wenigstens eine antreibbare Drehgelenk (42, 43) an einem Gestänge (46) angreift, welches mit einem Ende an der Fahrzeugkarosserie (9) gelenkig festgelegt ist und mit dem anderen Ende an einem in Fahrzeuglängsrichtung beabstandet zu einer Drehachse (A5) des Deckelelementes (16) liegenden Bereich des Deckelelements (16) gelenkig festgelegt ist, wobei das Gestänge (46) aus zwei miteinander verbundenen Hebeln (47, 48) gebildet ist, welche vorzugsweise unterschiedlich lang ausgebildet sind, und wobei eine Verbindung der Hebel (47, 48) untereinander und wenigstens eine der gelenkigen Anbindungen an dem Deckelelement (16) oder der Fahrzeugkarosserie (9) mit einem antreibbaren Drehgelenk (42, 43) ausgebildet ist.

20. Vorrichtung nach Anspruch 19,
**dadurch gekennzeichnet,**
**dass** das Deckelelement (16) in seiner Schließstellung durch Verschwenken des Gestänges (46) in eine Totpunktstellung oder Übertotpunktstellung verriegelbar ist.

21. Vorrichtung nach einem der Ansprüche 18 bis 20,
**dadurch gekennzeichnet,**
**dass** das wenigstens eine antreibbare Drehgelenk (42, 43) in deaktiviertem Zustand zur Notbetätigung manuell verstellbar ausgelegt ist.

22. Vorrichtung nach einem der Ansprüche 18 bis 21,
**dadurch gekennzeichnet,**
**dass** das Deckelelement (16) an der seiner Drehachse (A5) zugeordneten Kante (16B) mittels wenigstens eines passiven Drehgelenks (45), insbesondere eines Schwanenhalslagers (45), an der Fahrzeugkarosserie (9) festgelegt ist.

## Claims

1. A device for actuating a plurality of pivotable exterior vehicle elements (6, 7, 8, 15, 16), which are hood elements of a hood (1) of a convertible vehicle (2) and comprise at least foldable roof elements (6, 7, 8), at least one of said roof elements (8, 15, 16) being pivotally connected to the vehicle body (9), at least one respective pivot joint (10A, 10B, 10C, 10D, 10E, 10F, 11A, 11B, 13A, 13B, 14A, 14B, 17A, 17B, 42, 43, 44, 45) and at least one drive (18, 19, 20, 21, 22) being provided to connect the hood elements (6, 7, 8, 15, 16) with each other and with respect to the vehicle body, said drive being provided as an electric motor (18, 19, 20, 21, 22) which introduces a drive torque directly into an associated pivot joint (10A, 10B, 11A, 11B, 13A, 13B, 14A, 14B, 17A, 17B; 42, 43), wherein at least one respective pivot joint (10A, 10B, 11A, 11 B, 13A, 13B, 14A, 14B, 17A, 17B, 42, 43) of different connections is independently controllable,
**characterised in that**
an electric motor (18, 19, 20, 21, 22) is associated with each connection around a pivot axle (A1, A2, A3, A4, A5) of the hood elements (6, 7, 8, 15, 16) with each other or with the vehicle body (9).

2. The device according to claim 1, **characterised in that** a torque of the electric motor (18, 19, 20, 21, 22) can be introduced into a pivot joint (10A, 10B, 11A, 11 B, 13A, 13B, 14A, 14B, 17A, 17B; 42, 43) by means of a flexible shaft (23).

3. The device according to claim 1 or 2, **characterised in that** at least two respective pivot joints (10A, 10B, 11A, 11B, 13A, 13B, 14A, 14B, 17A, 17B; 42, 43), located opposite each other with respect to a longitudinal axis of the vehicle, are connected to the electric motor (19, 20, 21, 22) by means of flexible shafts (23).

4. The device according to any one of claims 1 to 3, **characterised in that** at least some of a plurality of pivot joints (10A, 10B, 11A, 11B, 13A, 13B, 14A, 14B, 17A, 17B; 42, 43) are identical in construction.

5. The device according to any one of claims 1 to 4, **characterised in that** the pivot joint (10A, 10B, 11A, 11B, 13A, 13B, 14A, 14B, 17A, 17B; 42, 43) is driven by means of a transmission device (24), said transmission device (24) being arranged between a lever (3) associated with a first exterior vehicle element (6) and another lever (4) of a second exterior vehicle element (7).

6. The device according to claim 5, **characterised in that** a flexible shaft (23) transmitting the torque of the electric motor (18, 19, 20, 21, 22) is rotatably connected with a screw (25) of the transmission device (24), said screw (25) engaging a first gear (26) supported at one of said levers (4), said first gear (26) engaging at least a second gear (27) and being operatively connected with the second lever (3).

7. The device according to any one of claims 1 to 6, **characterised in that** a position detection sensor (29) is arranged at the pivot joint (10A, 10B, 11A, 11 B, 13A, 13B, 14A, 14B, 17A, 17B; 42, 43).

8. The device according to claim 7, **characterised in that** the position detection sensor (29) is provided as a potentiometer, with a striker being arranged coaxially with respect to the respective pivot axle (A1, A2, A3, A4, A5) in the transmission device (24) of the respective pivot joint (10A, 10B, 11A, 11B, 13A, 13B, 14A, 14B, 17A, 17B; 42, 43), and the potentiometer (29) is arranged on said striker.

9. The device according to any one of claims 1 to 8, **characterised in that** an adjustable abutment (32), in particular one provided with a regulating screw (33), is provided on the pivot joint (10A, 10B, 11A, 11B, 13A, 13B, 14A, 14B; 42, 43).

10. The device according to any one of claims 1 to 9, **characterised in that** the pivot joint (10A, 10B, 11A, 11B, 13A, 13B, 14A, 14B; 42, 43) is rotatable by at least approximately 360°.

11. The device according to any one of claims 1 to 10, **characterised in that** a connection of the hood elements (6, 7, 8, 15, 16) with each other or with the vehicle body (9) is formed by at least one controllable pivot joint (10A, 10B; 42, 43) and at least one passive pivot joint (10C, 10D, 10E, 10F; 44, 45), the associated pivot axle (A4) of the connection being a pivot axle of a passive pivot joint (10C, 10D).

12. The device according to any one of claims 1 to 11, **characterised in that** a plurality of electric motors (18, 19, 20, 21, 22) is connected to a central electrical control unit.

13. The device according to any one of claims 1 to 12, **characterised in that** at least some of the electric motors each have a control unit, each of said control units being connected to at least one other control unit for at least one electric motor via a data bus.

14. The device according to any one of claims 1 to 13, **characterised in that** three roof elements (6, 7, 8) are provided which can be folded together in an S-shaped manner such that a front roof element (6) is stowed, in a folding position in which the hood (1) is open, rearwardly pivoted over a central roof element (7), beneath which there is a rear roof element (8), which is also pivoted to the rear with respect to its position with the hood closed, and during an opening movement of the hood (2) the front roof element (6) is pivoted upward and rearward around a first pivot axle (A1), the central roof element (7) is pivoted around its rear, second pivot axle (A2), and the rear roof element is pivoted rearward around its rear, third pivot axle (A3), with the pivoting of the front element (6) selectively taking place substantially before or during or after the pivoting of the central roof element (7) and the rear roof element (8).

15. The device according to any one of claims 1 to 14, **characterised in that**, during an opening movement of the hood (2), a tensioning bow (15) is first raised to enable an upward pivoting movement of a hood compartment cover (16) and is then lowered again after putting up the hood compartment cover (16), after which the roof elements (6, 7, 8) are placed on the tensioning bow (15).

16. The device according to any one of claims 1 to 13, **characterised in that** three roof elements (6, 7, 8) are foldable in such a way that during an opening movement of the hood (2), a central roof element (7) is first pivoted towards the rear around its rear pivot axle (A2), and a rear roof element (8) is pivoted towards the rear around its rear pivot axle (A3), and in an at least approximately horizontal position of the rear roof element (8), a front roof element (6) and the central roof element (7) are deposited such that the central roof element (7) is pivoted on the rear roof element (8) and at least approximately parallel to the latter, and the front roof element (6) is pivoted downwards, with respect to the latter, into an at least approximately vertical position.

17. The device according to any one of claims 1 to 16, **characterised in that** during an opening movement of the hood (2), a hood compartment cover (16) is first swung open and pivoted downwards into an at least approximately horizontal position in the stowage position of the roof elements (6, 7, 8).

18. The device according to any one of claims 1 to 17, **characterised in that** at least one exterior vehicle element is a cover element (16), in particular a hood compartment cover or a trunk lid, which can be raised from a closed position at least at one edge (16A) by being pivoted around an oppositely disposed edge (16B) by means of at least one drivable pivot joint (42, 43) and at least one associated drive (22).

19. The device according to claim 18, **characterised in that** the at least one drivable pivot joint (42, 43) engages a linkage (46), which is hingedly fixed at one end to the vehicle body (9) and is hingedly fixed at the other end to a region of the cover element (16) which is spaced apart from a pivot axle (A5) of the cover element (16) in the longitudinal vehicle direction, said linkage (46) being formed by two inter-connected levers (47, 48), preferably of different lengths, and wherein a connection of the levers (47, 48) with each other and at least one of the hinged connections to the cover element (16) or the vehicle body (9) is provided with a drivable pivot joint (42, 43).

20. The device according to claim 19, **characterised in that** the cover element (16) can be latched in its closed position by pivoting the linkage (46) into a dead centre or over-centre position.

21. The device according to any one of claims 18 to 20, **characterised in that** the at least one drivable pivot joint (42, 43) is provided to be manually adjustable for emergency activation in its deactivated state.

22. The device according to any one of claims 18 to 21, **characterised in that** the cover element (16) is fixed to the vehicle body (9), at the edge (16B) associated with its pivot axle (A5), by means of at least one passive pivot joint (45), in particular a swan neck bearing (45).

## Revendications

1. Dispositif d'actionnement de plusieurs éléments extérieurs de véhicule (6, 7, 8, 15, 16) aptes à pivoter, qui sont des éléments d'une capote (1) d'un véhicule cabriolet (2) et qui comprennent au moins des éléments de toit (6, 7, 8) pliables, dont au moins un élément de toit (8, 15, 16) est relié en pivotement à la carrosserie (9), au moins une articulation pivotante respective (10A, 10B, 10C, 10D, 10E, 10F, 11A, 11B, 13A, 13B, 14A, 14B, 17A, 17B, 42, 43, 44, 45) et au moins un entrainement respectif (18, 19, 20, 21, 22) étant prévus pour relier les éléments de capote (6, 7, 8, 15, 16) entre eux et par rapport à la carrosserie, ledit entrainement étant réalisé sous forme d'un moteur électrique (18, 19, 20, 21, 22) qui introduit un couple d'entrainement directement dans une articulation pivotante associée (10A, 10B, 11A, 11B, 13A, 13B, 14A, 14B, 17A, 17B; 42, 43), au moins une articulation pivotante respective (10A, 10B, 11A, 11B, 13A, 13B, 14A, 14B, 17A, 17B, 42, 43) de différentes liaisons pouvant être commandée de manière indépendante,
**caractérisé en ce qu'**un moteur électrique (18, 19, 20, 21, 22) est associé avec chaque liaison, autour d'un axe de pivotement (A1, A2, A3, A4, A5), des éléments de capote (6, 7, 8, 15, 16) entre eux ou avec la carrosserie (9).

2. Dispositif selon la revendication 1, **caractérisé en ce qu'**un couple du moteur électrique (18, 19, 20, 21, 22) peut être introduit dans une articulation pivotante (10A, 10B, 11A, 11B, 13A, 13B, 14A, 14B, 17A, 17B; 42, 43) au moyen d'un arbre flexible (23).

3. Dispositif selon la revendication 1 ou 2, **caractérisé en ce qu'**au moins deux articulations pivotantes respectives (10A, 10B, 11A, 11B, 13A, 13B, 14A, 14B, 17A, 17B; 42, 43), disposées de côtés opposés par rapport à un axe longitudinale du véhicule, sont reliés au moteur électrique (19, 20, 21, 22) au moyen d'arbres flexibles (23).

4. Dispositif selon l'une quelconque des revendications 1 à 3, **caractérisé en ce qu'**au moins quelques-unes de plusieurs articulations pivotantes (10A, 10B, 11A, 11B, 13A, 13B, 14A, 14B, 17A, 17B; 42, 43) sont de construction identique.

5. Dispositif selon l'une quelconque des revendications 1 à 4, **caractérisé en ce que** l'articulation pivotante (10A, 10B, 11A, 11B, 13A, 13B, 14A, 14B, 17A, 17B; 42, 43) est entrainée au moyen d'un dispositif de transmission (24) qui est disposé entre un levier (3) associé avec un premier élément extérieur de véhicule (6) et un autre levier (4) d'un deuxième élément extérieur de véhicule (7).

6. Dispositif selon la revendication 5, **caractérisé en ce qu'**un arbre flexible (23) transmettant le couple du moteur électrique (18, 19, 20, 21, 22) est relié en rotation à une vis sans fin (25) du dispositif de transmission (24), ladite vis sans fin (25) venant en prise avec une première roue dentée (26) supportée sur l'un desdits leviers (4), ladite première roue dentée (26) venant en prise avec au moins une deuxième roue dentée (27) et étant en liaison active avec le deuxième levier (3).

7. Dispositif selon l'une quelconque des revendications 1 à 6, **caractérisé en ce qu'**un capteur de détection de position (29) est disposé sur l'articulation pivotante (10A, 10B, 11A, 11B, 13A, 13B, 14A, 14B, 17A, 17B; 42, 43).

8. Dispositif selon la revendication 7, **caractérisé en ce que** le capteur de détection de position (29) est réalisé sous forme d'un potentiomètre, un entraineur étant disposé de manière coaxiale par rapport à l'axe de pivotement respectif (A1, A2, A3, A4, A5) dans le dispositif de transmission (24) de l'articulation pivotante respective (10A, 10B, 11A, 11B, 13A, 13B, 14A, 14B, 17A, 17B; 42, 43), et le potentiomètre (29) étant disposé sur ledit entraineur.

9. Dispositif selon l'une quelconque des revendications 1 à 8, **caractérisé en ce que** l'on prévoit sur l'articulation pivotante (10A, 10B, 11A, 11B, 13A, 13B, 14A, 14B; 42, 43) une butée réglable (32), qui présente notamment une vis de réglage (33).

10. Dispositif selon l'une quelconque des revendications 1 à 9, **caractérisé en ce que** l'articulation pivotante (10A, 10B, 11A, 11B, 13A, 13B, 14A, 14B; 42, 43) peut pivoter autour d'au moins 360°.

11. Dispositif selon l'une quelconque des revendications 1 à 10, **caractérisé en ce qu'**une liaison des éléments de capote (6, 7, 8, 15, 16) entre eux ou avec la carrosserie (9) est respectivement réalisée par au moins une articulation pivotante commandable (10A, 10B; 42, 43) et au moins une articulation pivotante passive (10C, 10D, 10E, 10F; 44, 45), l'axe de pivotement (A4) associé de ladite liaison étant un axe de pivotement d'une articulation pivotante passive (10C, 10D).

12. Dispositif selon l'une quelconque des revendications 1 à 11, **caractérisé en ce que** plusieurs moteurs électriques (18, 19, 20, 21, 22) sont reliés à une unité de commande électrique centrale.

13. Dispositif selon l'une quelconque des revendications 1 à 12, **caractérisé en ce qu'**au moins quelques-uns des moteurs électriques présentent chacun une unité de commande, dont chacune est reliée par un bus de données à au moins une autre unité de commande pour au moins un moteur électrique.

14. Dispositif selon l'une quelconque des revendications 1 à 13, **caractérisé en ce que** l'on prévoit trois éléments de toit (6, 7, 8) qui sont repliables en forme de S de sorte qu'un élément de toit avant (6), dans une position de pliage dans laquelle la capote (2) est ouverte, soit déposé, par pivotement vers l'arrière, au-dessus d'un élément de toit central (7) et d'un élément de toit arrière (8), ce dernier étant disposé au-dessous de l'élément de toit central (7) et étant également pivoté vers l'arrière par rapport à sa position lorsque la capote est fermée, et lors d'un mouvement d'ouverture de la capote (2), l'élément de toit avant (6) est pivoté vers le haut et vers l'arrière autour d'un premier axe de pivotement (A1), l'élément de toit central (7) est pivoté autour de son deuxième axe de pivotement arrière (A2), et l'élément de toit arrière est pivoté vers l'arrière autour de son troisième axe de pivotement arrière (A3), le pivotement de l'élément avant (6) s'effectuant au choix sensiblement avant ou pendant ou après le pivotement de l'élément de toit central (7) et de l'élément de toit arrière (8).

15. Dispositif selon l'une quelconque des revendications 1 à 14, **caractérisé en ce que**, lors d'un mouvement d'ouverture de la capote (2), on lève d'abord un étrier de tension (15) pour permettre un pivotement vers le haut d'un couvercle du compartiment de capote (16) et on l'abaisse ensuite après avoir mis le couvercle du compartiment de capote (16) en position verticale, après quoi on dépose les éléments de toit (6, 7, 8) sur l'étrier de tension (15).

16. Dispositif selon l'une quelconque des revendications 1 à 13, **caractérisé en ce que** trois éléments de toit (6, 7, 8) sont pliables de manière à ce que, lors d'un mouvement d'ouverture de la capote (2), un élément de toit central (7) est d'abord pivoté vers l'arrière autour de son axe de pivotement arrière (A2), et un élément de toit arrière (8) est pivoté vers l'arrière autour de son axe de pivotement arrière (A3); et dans une position presque horizontale de l'élément de toit arrière (8), un élément de toit avant (6) et l'élément de toit central (7) sont déposés de manière à pivoter l'élément de toit central (7) sur l'élément de toit arrière (8) et de manière au moins presque parallèle à ce dernier, et l'élément de toit avant (6) est pivoté vers le bas, par rapport à ce dernier, jusqu'à une position au moins presque verticale.

17. Dispositif selon l'une quelconque des revendications 1 à 16, **caractérisé en ce que**, lors d'un mouvement d'ouverture de la capote (2), un couvercle du compartiment de capote (16) est d'abord ouvert par pivotement et, dans la position de dépose des éléments de toit (6, 7, 8), celui-ci est pivoté vers le bas jusqu'à une position au moins presque horizontale.

18. Dispositif selon l'une quelconque des revendications 1 à 17, **caractérisé en ce qu'**au moins un élément extérieur de véhicule est un élément de couvercle (16), notamment un couvercle de compartiment de capote ou un couvercle arrière, que l'on peut lever en position fermée par au moins un bord (16A), par pivotement autour d'un bord (16B) opposé au moyen d'au moins une articulation pivotante entrainable (42, 43) et d'au moins un entrainement associé (22).

19. Dispositif selon la revendication 18, **caractérisé en ce que** l'au moins une articulation pivotante entrainable (42, 43) vient en prise avec une tringlerie (46), dont une extrémité est fixée de manière articulée à la carrosserie (9) et l'autre extrémité est fixée de manière articulée à une région de l'élément de couvercle (16) écartée d'un axe de pivotement (A5) de l'élément de couvercle (16) dans une direction longitudinale du véhicule, ladite tringlerie (46) étant constituée par deux leviers (47, 48) reliés l'un à l'autre, dont chacun présente de préférence une longueur différente, et une liaison des leviers (47, 48) entre eux et au moins une des articulations audit élément de couvercle (16) ou à la carrosserie (9) est réalisée avec une articulation pivotante entrainable (42, 43).

20. Dispositif selon la revendication 19, **caractérisé en ce que** l'élément de couvercle (16) peut être verrouillé dans sa position fermée par pivotement de la tringlerie (46) dans une position de point mort ou de dépassement du point mort.

21. Dispositif selon l'une quelconque des revendications 18 à 20, **caractérisé en ce que** ladite au moins une articulation pivotante entrainable (42, 43) est réalisée de manière à être réglable à main pour un actionnement d'urgence dans son état désactivé.

22. Dispositif selon l'une quelconque des revendications 18 à 21, **caractérisé en ce que** l'élément de couvercle (16) est monté fixe à la carrosserie (9) par son bord (16B) associé avec son axe de pivotement (A5), ce montage se faisant au moyen d'au moins une articulation pivotante passive (45), notamment un support en col de cygne (45).
